# FASCICULE DE BREVET EUROPEEN

(11) **EP 3 170 650 B1**
(45) Date de publication et mention de la délivrance du brevet: **15.07.2020**
(21) Numéro de dépôt: 16199579.0
(22) Date de dépôt: 18.11.2016
(51) Int. Cl.: B29C 70/50, B29C 70/56, B29B 15/12, B29C 70/20, B63H 9/06

(54) **PROCÉDÉ DE FABRICATION D'UNE BANDE COMPOSITE ET INSTALLATION DE PRODUCTION CORRESPONDANTE POUR LA PRODUCTION D'UNE VOILE DE BATEAU**
HERSTELLUNGSVERFAHREN EINES VERBUNDSTOFFBANDES UND ENTSPRECHENDE HERSTELLUNGSANLAGE FÜR DIE HERSTELLUNG EINES SEGELS EINES SEGELBOOTES
MANUFACTURING METHOD FOR MANUFACTURING A COMPOSITE STRIP AND CORRESPONDING PRODUCTION FACILITY FOR THE PRODUCTION OF A SHIP SAIL

(30) Priorité: 19.11.2015 FR 1561134
(43) Date de publication de la demande: 24.05.2017
(73) Titulaire: Incidences Technologies, 17180 Perigny (FR)
(72) Inventeur: FAUVE, Stéphane, 17180 PERIGNY (FR); MORVAN, Pierre-Antoine, 17180 PERIGNY (FR); TURBAN, Brice, 17180 PERIGNY (FR)
(74) Mandataire: Lavoix

(56) Documents cités:
- WO-A1-94/11185
- US-A1- 2012 251 823

## Description

La présente invention concerne un procédé de fabrication d'une bande composite, du type comportant les étapes suivantes :
- fourniture de premiers filaments, lesdits premiers filaments étant regroupés en au moins un premier faisceau,
- étalement des premiers filaments les uns à l'écart des autres et enduction des premiers filaments avec une résine, de manière à former un premier voile de filaments et de résine, et
- séchage du premier voile de filaments et de résine, de manière à obtenir une première bande composite,
l'étape d'étalement et d'enduction comprenant le passage des premiers filaments dans un premier bain de résine, contenant une première solution de résine, entre deux premiers rouleaux, lesdits premiers rouleaux étant disposés sensiblement parallèlement l'un à l'autre et tournant autour de leurs axes respectifs dans des sens opposés l'un vers l'autre, de manière à entraîner les premiers filaments dans le bain de résine à une vitesse d'entraînement, lesdits premiers rouleaux définissant ensemble un fond du premier bain de résine, les premiers filaments entrant dans le premier bain de résine par une surface du premier bain de résine et sortant du premier bain de résine par le fond du premier bain de résine.

L'invention concerne également un procédé de production d'une voile de bateau, mettant en oeuvre un tel procédé de fabrication, et une installation de fabrication de bandes composites.

Traditionnellement, les voiles de bateau sont fabriquées à partir de morceaux de toile de voile assemblés les uns aux autres. Ces morceaux de toile de voile sont formés de fils constitués de fibres entortillées, les fils étant tissés ensemble de manière à former la toile de voile.

Ces voiles présentent l'inconvénient d'être lourdes et d'avoir une forme non stable. Or ces deux facteurs présentent une importance capitale pour les voiliers, en particulier pour les voiliers de compétition. En effet, le poids de la voile impacte directement l'inertie ainsi que la gite du voilier, et donc les performances de ce dernier. Et la stabilité du profil est un gage majeur à la performance aérodynamique de la voile et donc à la vitesse du navire.

Un objectif des fabricants de voile est donc de produire des voiles qui soient à la fois légères et ayant un comportement stable et efficace sur le plan aérodynamique. Or cet objectif est irréalisable avec la méthode traditionnelle de fabrication de voiles, car le tissage ne permet ni la stabilité de forme en dynamique et dans le temps, ni un gain de poids car l'allègement de la voile entraîne le plus souvent une diminution de sa résistance.

Pour réaliser l'objectif précité, il a été développé dans un premier temps des voiles laminées composées de panneaux dans lesquelles des fibres de renforcement enduites de colle sont déposées entre deux films plastiques en poly(téréphtalate d'éthylène) (PET), typiquement des films Mylar®, la voile étant fabriquée par assemblage de panneaux suivant des coupes précises (triradiales par exemple).

Puis, dans un second temps, il a été développé des membranes dans lesquelles les fibres de renforcement sont orientées sur mesure de façon à reprendre au mieux les efforts afin d'obtenir une forme efficace sur le plan aérodynamique, lesdites fibres de renforcement étant là aussi enduites de colle et déposées entre deux films plastiques. Les films plastiques assurent dans ces cas la cohésion de l'ensemble et contribuent à la tenue structurelle de la voile dans les espaces laissés libres entres les fibres. Ces membranes, fabriquées sur mesure, à plat, sont ensuite conformées de manière à leur donner une forme tridimensionnelle au moyen de la technique connue dite des pinces, dans laquelle les membranes sont découpées en panneaux ayant chacun un bord droit et un bord courbe, le bord droit d'un panneau étant ensuite lié au bord courbe d'un autre panneau par collage et/ou couture.

Toutefois, ces voiles laminées ont l'inconvénient de présenter un risque de délamination élevé conduisant à la destruction de la voile. En outre, elles présentent une importante hétérogénéité en termes de tenue structurelle, du fait de la présence de grands intervalles entre les fibres. De plus, la contribution des films plastiques à la tenue structurelle de ces voiles est très faible, et la présence de ces films apporte un poids supplémentaire très important par rapport à l'intérêt qu'elle procure. Enfin, ces voiles peuvent se déchirer assez facilement, surtout aux endroits n'ayant pas ou peu de fibres.

Pour résoudre ces problèmes, il a été proposé par WO 94/11185 A1 un nouveau type de voiles laminées dans lesquelles, au lieu de déposer des fibres de renforcement enduites de colle entre les films Mylar®, on superpose trois bandes composites formées chacune de filaments de renforcement noyés dans une matrice de résine. Les filaments de chaque bande composite sont tous orientés parallèlement les uns aux autres, et les bandes composites sont déposées de sorte que l'orientation des filaments de chaque bande forme un angle d'environ 60° avec l'orientation des filaments de chaque autre bande. Les bandes composites sont ensuite passées avec les films Mylar® dans un autoclave pour assurer la cohésion de l'ensemble.

Grâce à l'emploi de filaments au lieu de fibres, il est possible de réduire considérablement les intervalles entre les filaments, et de diminuer ainsi l'hétérogénéité de la voile en termes de tenue structurelle. La fonction de tenue structurelle des films Mylar® est considérablement réduite, la voile se déforme moins facilement, et les risques de délamination sont réduits car il y a beaucoup plus de surface d'interaction entre le film et les filaments, et donc une meilleure cohésion de l'ensemble. En outre, l'éventuelle délamination des films Mylar® est moins sujette à problèmes, dans la mesure où ceux-ci n'assurent plus la cohésion de l'ensemble. Enfin, la voile est allégée.

Toutefois, un problème qui se pose est le fait d'obtenir un étalement satisfaisant des filaments pour former les bandes composites. En effet, les filaments sont fournis sous forme de fibres dans lesquelles les filaments sont regroupés en faisceau, et ces filaments doivent être étalés à l'écart les uns des autres pour former les bandes composites. Or cet étalement est difficile à obtenir et, une fois l'étalement obtenu, les filaments ont tendance à se regrouper à nouveau en faisceaux sous l'effet de la traction appliquée sur les filaments.

US 8 506 739 B2 décrit des procédés d'étalement de filaments pour former de telles bandes composites.

Un premier procédé d'étalement de filaments de carbone décrit dans ce document consiste à brûler l'enveloppe de fibres de carbone et à plonger directement les filaments constituant ces fibres dans un bain de résine entre deux rouleaux. L'étalement obtenu par la mise en oeuvre de ce procédé ne donne toutefois pas entière satisfaction, en particulier lorsque ce procédé est utilisé pour étaler des filaments de matériaux autres que le carbone, tels que l'aramide ou le polyéthylène de masse molaire très élevée (mieux connu sous l'acronyme anglais d'UHMWPE pour « Ultra High Molecular Weight Polyethylene »).

Un deuxième procédé d'étalement de filaments d'aramide est également décrit dans US 8 506 739 B2. Ce procédé consiste à passer des fibres d'aramide au travers d'un poste d'étalement constitué d'une série de couteaux et de barres. Un tel procédé d'étalement présente toutefois l'inconvénient de ne pas permettre un étalement satisfaisant des filaments, les filaments demeurant accolés les uns aux autres après être passés à travers le poste d'étalement ; en conséquence, les bandes composites obtenues demeurent relativement lourdes, avec une masse surfacique généralement supérieure à 80 g/m².

US2012/251823 décrit une installation de préparation d'une fibre imprégnée de résine.

Un objectif de l'invention est d'obtenir un bon compromis entre le poids et la tenue structurelle d'une bande composite. Un autre objectif est d'obtenir un bon compromis entre le poids et la tenue structurelle d'une membrane souple composite utilisée comme voile de bateau.

A cet effet, l'invention a pour objet un procédé de fabrication d'une bande composite du type précité, dans lequel l'étape d'étalement et d'enduction comprend également, une étape de pré-étalement des premiers filaments à leur entrée dans le premier bain de résine, ladite étape de pré-étalement comprenant une phase de mise sous tension des premiers filaments suivant une direction parallèle à leur axe d'extension et une phase de relâchement de la tension appliquée sur les premiers filaments, les phases de mise sous tension et de relâchement alternant cycliquement.

Selon des modes de réalisation particuliers de l'invention, le procédé de fabrication présente également l'une ou plusieurs des caractéristiques suivantes, prise(s) isolément ou suivant toute(s) combinaison(s) techniquement possible(s) :
- les premiers filaments sont orientés, lors de l'étape de pré-étalement, de sorte que leur axe d'extension s'étende sensiblement verticalement,
- les phases de mise sous tension et de relâchement alternent à une fréquence comprise entre 240 et 70 Hz,
- la première solution de résine comprend une résine thermoplastique diluée dans de l'eau, ladite résine thermoplastique ayant un module viscoélastique, à 20°C, compris entre 2.10^{e}5 Pa et 3.10^{e}8 Pa, de préférence entre 2.10^{e}6 et 2.10^{e}7 Pa.,
- l'étape de pré-étalement comprend le passage des premiers filaments contre une surface de contact d'un excentrique tournant autour d'un axe de rotation sensiblement parallèle aux premiers rouleaux, la distance de la surface de contact à l'axe de rotation variant, au cours de la rotation de l'excentrique autour de son axe, entre une distance minimale et une distance maximale, la phase de mise sous tension des premiers filaments étant constituée par une phase au cours de laquelle la distance de la surface de contact à l'axe de rotation varie de sa distance minimale à sa distance maximale, et la phase de relâchement étant constituée par une phase au cours de laquelle la distance de la surface de contact à l'axe de rotation varie de sa distance maximale à sa distance minimale,
- le procédé comprend une étape supplémentaire de prise en sandwich des premiers filaments entre deux films antiadhésifs à l'intérieur du premier bain de résine de manière à ce que, à leur sortie du premier bain du résine, les premiers filaments soient pris en sandwich entre lesdits films antiadhésifs,
- le procédé comprend une étape de retrait d'un premier des films antiadhésifs après le séchage du premier voile de filaments,
- au moins un des films antiadhésifs, de préférence chacun des films antiadhésifs, est perméable à la vapeur d'eau,
- au moins un des films antiadhésifs, de préférence chacun des films antiadhésifs, est constitué par du papier siliconé,
- l'étape de fourniture comprend la fourniture d'au moins une fibre formée de premiers filaments regroupés en faisceau, et le procédé comprend une étape supplémentaire de traitement de la ou chaque fibre, préalablement à l'étape de pré-étalement, adaptée pour faciliter l'étalement ultérieur des premiers filaments composant la fibre,
- l'étape de traitement comprend le chauffage de la ou chaque fibre par rayonnement, en particulier par rayonnement infrarouge,
- l'étape de traitement comprend le lavage de la ou chaque fibre dans un bain de lavage.

L'invention a également pour objet un procédé de production d'une voile de bateau, comprenant les étapes successives suivantes :
- fabrication d'une pluralité de bandes composites selon l'une quelconque des revendications précédentes, et
- assemblage d'une membrane, ladite étape d'assemblage comprenant les sous-étapes suivantes :
   ∘ dépose des bandes composites sur un support, suivant un motif prédéterminé, et
   ∘ chauffage et compression simultanés des bandes composites, de manière à lier les bandes composites les unes aux autres.

Selon des modes de réalisation particuliers de l'invention, le procédé de production présente également l'une ou plusieurs des caractéristiques suivantes, prise(s) isolément ou suivant toute(s) combinaison(s) techniquement possible(s) :
- lors de l'étape de chauffage et de compression, les bandes composites sont soumises à une pression comprise entre 5 et 7 kg/cm² et à une température comprise entre 90 et 130°C, de préférence comprise entre 100 et 120°C,
- lors de l'étape de chauffage et compression, les bandes composites sont comprimées sur le support,
- le support comprend une surface de réception des bandes composites, ladite surface de réception étant plane,
- le procédé comprend :
   ∘ préalablement à l'étape de chauffage et compression, une étape de plaquage d'un couvercle contre le support, par-dessus les bandes composites déposées, et
   ∘ ultérieurement à l'étape de chauffage et compression, une étape de démoulage de la membrane produite par injection d'air entre le couvercle et les bandes composites.
- le procédé comprend une étape de conformation tridimensionnelle de la voile, comprenant une sous-étape de découpage de la membrane en panneaux suivie d'une sous-étape de liaison d'un bord de chaque panneau contre un bord d'un autre panneau, au moins l'un desdits bords étant incurvé, et
- la sous-étape de liaison comprend le soudage desdits bords l'un à l'autre.

L'invention a également pour objet une installation de fabrication d'une bande composite, comprenant au moins un poste de fabrication d'une bande composite avec :
- un poste de fourniture de filaments,
- un poste d'étalement des filaments les uns à l'écart des autres et d'enduction des filaments avec une résine, de manière à former un voile de filaments et de résine, et
- un poste de séchage du voile de filaments et de résine,
le poste d'étalement et d'enduction comprenant un bain de résine, contenant une solution de résine, entre deux rouleaux, lesdits rouleaux étant disposés sensiblement parallèlement l'un à l'autre et définissant ensemble un fond du bain de résine, et un système d'entraînement des rouleaux en rotation autour de leurs axes respectifs dans des sens opposés l'un vers l'autre, de manière à entraîner les premiers filaments dans le bain de résine à une vitesse d'entraînement, le poste de fabrication étant configuré pour guider les filaments de sorte qu'ils entrent dans le bain de résine par une surface du bain de résine et sortent du bain de résine par le fond du bain de résine,
dans laquelle le poste d'étalement et d'enduction comprend également, en amont du bain de résine, un poste de pré-étalement des filaments, ledit poste de pré-étalement comprenant un organe tenseur adapté pour alternativement mettre une portion aval des filaments, disposée en aval de l'organe tenseur, sous tension suivant une direction parallèle à un axe d'extension de ladite portion aval, et relâcher la tension appliquée sur ladite portion aval, l'organe tenseur (49, 99) étant adapté pour alterner cycliquement les phases de mise sous tension des filaments (23) et de relâchement de la tension appliquée sur les filaments (23).

Selon des modes de réalisation particuliers de l'invention, l'installation de fabrication présente également l'une ou plusieurs des caractéristiques suivantes, prise(s) isolément ou suivant toute(s) combinaison(s) techniquement possible(s) :
- l'organe tenseur est adapté pour alterner les phases de mise sous tension des filaments et de relâchement de la tension appliquée sur les filaments à une fréquence comprise entre 240 et 70 Hz,
- la portion aval des filaments est orientée suivant une direction sensiblement verticale,
- les filaments comprennent une portion amont, disposée en amont de l'organe tenseur, qui est orientée suivant une direction inclinée ou horizontale,
- l'organe tenseur comprend un excentrique configuré pour tourner autour d'un axe de rotation sensiblement parallèle aux rouleaux, l'excentrique définissant une surface de contact avec les filaments dont la distance à l'axe de rotation varie, au cours de la rotation de l'excentrique autour de l'axe de rotation, entre une distance minimale et une distance maximale,
- chaque filament s'étend continument à travers les postes de fourniture, d'étalement et d'enduction et de séchage,
- le poste de fabrication comprend un poste de fourniture d'un film antiadhésif primaire et un poste de fourniture d'un film antiadhésif secondaire, lesdits films antiadhésifs primaire et secondaire passant dans le bain de résine, chacun le long d'un rouleau respectif, de manière à prendre les filaments en sandwich entre les films primaire et secondaire à leur sortie du bain de résine,
- au moins un des films antiadhésifs primaire et secondaire, de préférence chacun des films antiadhésifs primaire et secondaire, est perméable à la vapeur d'eau,
- au moins un des films antiadhésifs primaire et secondaire, de préférence chacun des films antiadhésifs primaire et secondaire, est constitué par du papier siliconé,
- le poste de fourniture comprend au moins une bobine autour de laquelle est enroulée au moins une fibre formée de filaments regroupés en faisceau, et le poste de fabrication comprend un poste de traitement de la ou chaque fibre en amont du poste de pré-étalement, adapté pour traiter la ou chaque fibre de manière à faciliter l'étalement de ladite fibre,
- le poste de traitement comprend un organe de chauffage par rayonnement, en particulier par rayonnement infrarouge, ou un bain de lavage,
- la solution de résine a une viscosité dynamique comprise entre 0 et 6000 mPa.s lors de son utilisation,
- la solution de résine est constituée par une résine diluée dans un diluant, par exemple par une résine thermoplastique diluée dans de l'eau, et
- la résine de la solution de résine a un module viscoélastique, à 20°C, compris entre 2.10^{e}5 Pa et 3.10^{e}8 Pa, de préférence entre 2.10^{e}6 et 2.10^{e}7 Pa.

Enfin, l'invention a également pour objet une installation de production de voile, comportant une installation de fabrication de bandes composites telle que définie ci-dessus et un poste d'assemblage-laminage des bandes composites fabriquées pour former une membrane souple.

D'autres caractéristiques et avantages de l'invention ressortiront à la lecture de la description qui va suivre, donnée uniquement à titre d'exemple et faite en se référant aux dessins annexés, dans lesquels :
- la Figure 1 est une vue schématique, de dessus, d'une installation de production de membranes souples selon l'invention,
- la Figure 2 est une vue schématique en perspective d'une installation de fabrication de bandes composites de l'installation de production de la Figure 1,
- la Figure 3 est vue schématique, de dessus, d'un poste d'assemblage-laminage de l'installation de la Figure 1,
- la Figure 4 est une vue schématique, de dessus, d'un poste de découpage-soudage de l'installation de la Figure 1,
- la Figure 5 est une vue schématique, de face, d'un détail de l'installation de fabrication de la Figure 2,
- la Figure 6 est une vue schématique, de dessus, d'une membrane obtenue en sortie du poste d'assemblage-laminage de la Figure 3, après découpage de cette membrane en panneaux,
- la Figure 7 est une vue en coupe suivant l'axe VII-VII de la Figure 6 d'une partie de la membrane, et
- la Figure 8 est une vue similaire à celle de la Figure 7, après réalisation de pinces pour lier les panneaux de la membrane les uns aux autres.

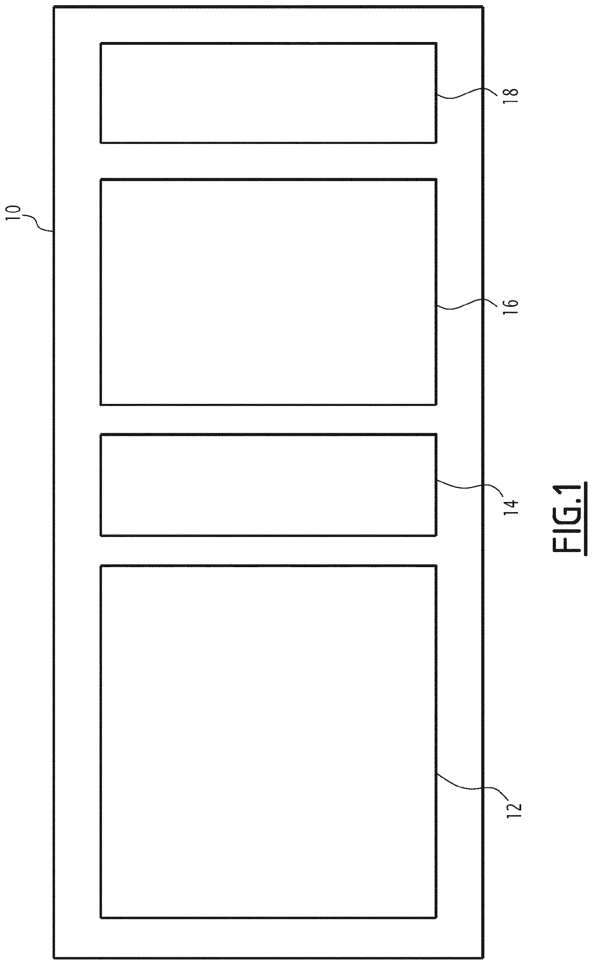

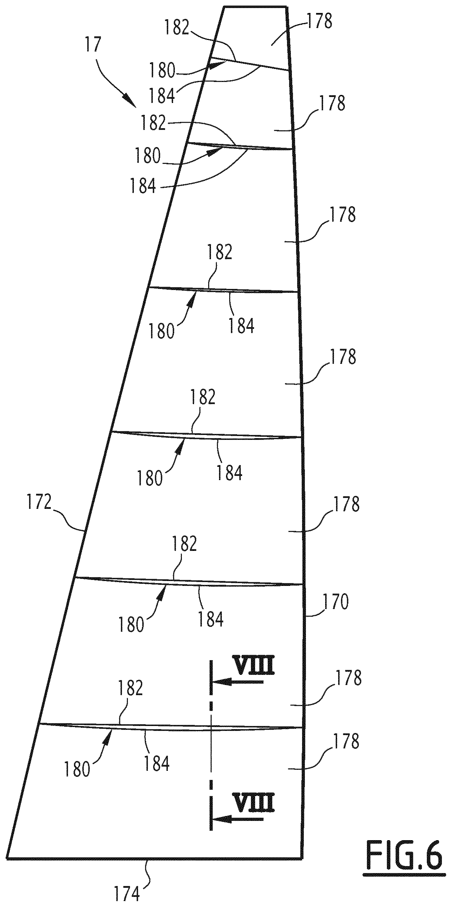

L'installation de production de voiles 10 de la Figure 1 comprend une installation 12 de fabrication de bandes composites, un poste 14 d'entreposage des bandes composites, un poste 16 d'assemblage-laminage des bandes composites pour former une membrane souple 17 (Figure 6), et un poste 18 de découpage-soudage de la membrane souple pour former une voile tridimensionnelle.

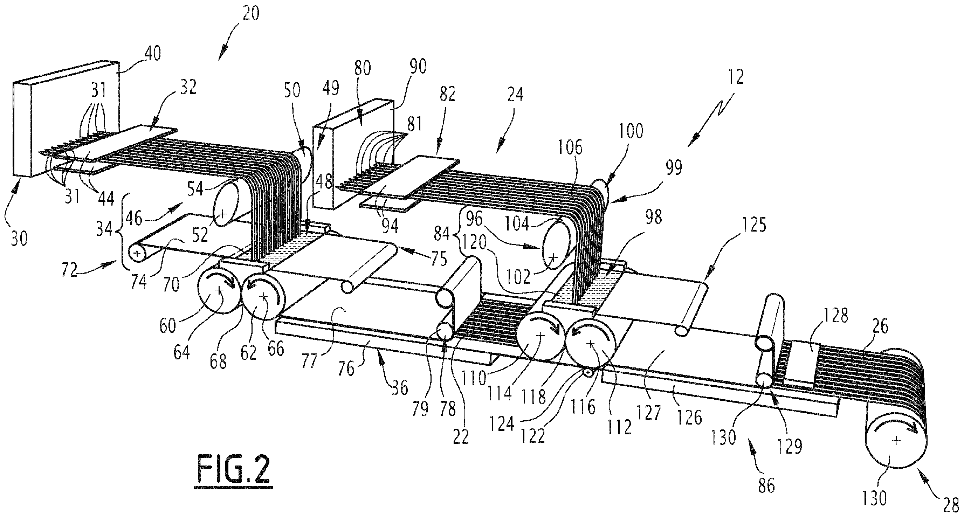

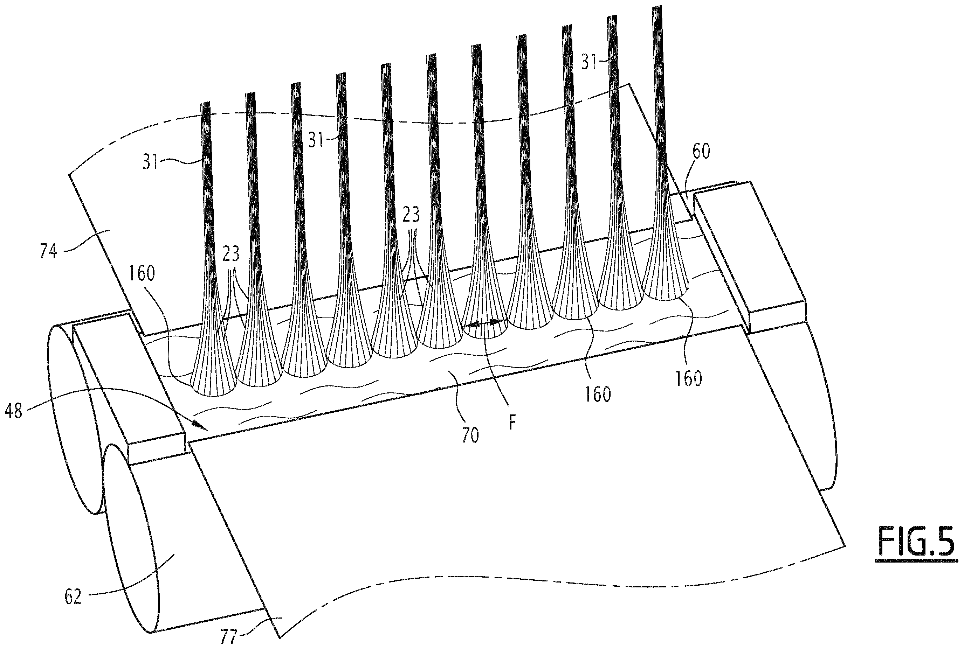

En référence à la Figure 2, l'installation de fabrication 12 comprend un premier poste 20 de fabrication d'une première bande composite 22 à partir de premiers filaments 23 (Figure 5), et un deuxième poste 24 de fabrication d'une bande composite hybride 26 à partir de la première bande composite 22 et de deuxièmes filaments. L'installation de fabrication 12 comprend également un poste 28 d'enroulement de la bande composite hybride 26.

Dans la suite, les termes « amont » et « aval » sont à entendre en référence au sens de déplacement des premiers et deuxièmes filaments dans l'installation 12.

Le premier poste de fabrication 20 comprend un premier poste 30 de fourniture des premiers filaments 23 sous forme de premières fibres 31, un premier poste 32 de traitement des premières fibres 31, en aval du premier poste de fourniture 30, un premier poste 34 d'étalement et d'enduction des premiers filaments 23 pour former un premier voile de filaments et de résine, en aval du premier poste de traitement 32, et un premier poste 36 de séchage du premier voile de filaments et de résine, en aval du premier poste d'étalement et d'enduction 36. Ces premiers postes 30, 32, 34, 36 sont juxtaposés successivement les uns à la suite des autres suivant une direction longitudinale, et chaque premier filament s'étend continument au travers de tous les premiers postes 30, 32, 34, 36 de sorte que chaque point d'un premier filament passe, au cours du fonctionnement du premier poste de fabrication 20, successivement par chacun des premiers postes 30, 32, 34, 36.

Les premiers filaments 23 sont typiquement des filaments d'aramide. En variante, les premiers filaments 23 sont des filaments de polyéthylène de masse molaire très élevée (mieux connu sous l'acronyme anglais d'UHMWPE pour « Ultra High Molecular Weight Polyethylene »), par exemple des filaments de Dyneema® ou de Spectra®. En variante encore, les premiers filaments 23 sont des filaments de carbone, de Vectran®, ou de polyester.

Le premier poste de fourniture 30 comprend un premier cantre 40 supportant une pluralité de premières bobines de fourniture (non représentées) autour desquelles sont enroulées une pluralité de premières fibres 31. Chaque première fibre est formée d'une pluralité de premiers filaments 23 regroupés en faisceau.

Chaque première bobine de fourniture est montée mobile en rotation relativement à un bâti (non représenté) du premier cantre 40 autour d'un axe transversal sensiblement perpendiculaire à la direction longitudinale, et les premières fibres 31 sont extraites du cantre 40 suivant la direction longitudinale.

Le premier poste de traitement 32 est adapté pour traiter les premières fibres 31 de manière à faciliter un étalement ultérieur des premiers filaments 23 composant les premières fibres 31. A cet effet, le premier poste de traitement est adapté pour détruire un élément de cohésion (non représenté) qui assure la cohésion des premiers filaments 23 entre eux au sein de chaque première fibre 31. Cet élément est le plus souvent constitué par une matrice enzymatique dont est enduite chaque première fibre. En variante, l'élément de cohésion est constitué par des ligatures réparties le long de la première fibre.

Le premier poste de traitement 32 est de préférence adapté pour brûler l'élément de cohésion de chaque première fibre 31. A cet effet, le premier poste de traitement 32 comprend un premier organe de chauffage 44 adapté pour chauffer chaque première fibre 31 à une température supérieure à une température de combustion de l'élément de cohésion de la première fibre 31, ce premier organe de chauffage 44 étant de préférence un organe de chauffage par rayonnement, en particulier par rayonnement infrarouge.

En variante (non représentée), le premier poste de traitement 32 est adapté pour dissoudre l'élément de cohésion de chaque première fibre 31. A cet effet, le premier poste de traitement 32 comprend typiquement un bain de lavage des premières fibres 31.

Le premier poste d'étalement et d'enduction 34 est adapté pour étaler les premiers filaments les uns à l'écart des autres, et pour enduire lesdits premiers filaments 23 avec une résine de manière à former le premier voile de filaments et de résine. A cet effet, le premier poste d'étalement et d'enduction 34 comprend un premier poste 46 de pré-étalement des premiers filaments 23 et un premier bain de résine 48, disposés successivement suivant la direction longitudinale, le premier poste de pré-étalement 46 étant en amont du premier bain de résine 48.

Le premier poste de pré-étalement 46 comprend un premier organe tenseur 49 adapté pour alternativement mettre une portion aval des filaments 23, disposée en aval de l'organe tenseur 49, entre le premier organe tenseur 49 et le premier bain de résine 48, sous tension suivant une direction parallèle à un axe d'extension de ladite portion aval, et relâcher la tension appliquée sur ladite portion aval.

A cet effet, le premier organe tenseur 49 comprend un premier excentrique 50 disposé sur le passage des premiers filaments 23 entre le premier poste de traitement 32 et le premier bain de résine 48, et un dispositif (non représenté) d'entraînement de l'excentrique 50 en rotation relativement au bâti autour d'un axe de rotation transversal 52.

L'excentrique 50 a une forme de cylindre (terme à comprendre dans son acception la plus large), en particulier de cylindre elliptique. L'excentrique 50 présente ainsi une surface périphérique cylindrique 54. Cette surface cylindrique 54 est de préférence C¹, c'est-à-dire qu'elle est dépourvue d'arrêté.

La surface cylindrique 54 est à une distance variable de l'axe de rotation 52, c'est-à-dire que tout point de la surface cylindrique 54 n'est pas à la même distance de l'axe de rotation 52 que chaque autre point de la surface cylindrique.

Une partie de la surface cylindrique 54 constitue une surface de contact avec les premiers filaments 23. Cette surface de contact est fixe angulairement relativement au bâti. Ainsi, au cours de la rotation de l'excentrique 50 autour de l'axe 52, la surface de contact se déplace le long de la surface cylindrique 54. La surface cylindrique 54 étant à une distance variable de l'axe de rotation 52, l'excentrique 50 est donc configuré pour que la distance de la surface de contact à l'axe de rotation 52 varie, au cours de la rotation de l'excentrique 50 autour de l'axe 52, entre une distance minimale et une distance maximale.

L'excentrique 50 est disposé de sorte que, lorsque la surface de contact est à sa distance maximale de l'axe 52, cela corresponde à une configuration dans laquelle le parcours des premiers filaments 23 entre le premier poste de traitement 32 et le premier bain de résine 48 est maximal, et que, lorsque la surface de contact est à sa distance minimale de l'axe 52, cela corresponde à une configuration dans laquelle le parcours des premiers filaments 23 entre le premier poste de traitement 32 et le premier bain de résine 48 est minimal. Ainsi, lorsque la surface de contact est à sa distance maximale de l'axe 52, les premiers filaments 23 sont sous tension et, lorsque la surface de contact est à sa distance minimale de l'axe 52, les premiers filaments 23 sont relâchés.

Les premiers filaments 23 sont disposés de manière à ce que leur portion aval soit orientée suivant une direction sensiblement verticale, c'est-à-dire de sorte que l'axe d'extension de ladite portion aval s'étende sensiblement verticalement. Les premiers filaments 23 sont également disposés de manière à avoir une portion amont, disposée en amont du premier organe tenseur 49, entre le premier organe tenseur 49 et le premier poste de traitement 32, qui soit orientée suivant une direction non verticale. Cette direction est, dans l'exemple représenté, une direction sensiblement horizontale ; en variante, il s'agit d'une direction inclinée.

Le dispositif d'entraînement comprend typiquement un moteur électrique et un module de commande du moteur électrique (non représentés). Le dispositif d'entraînement est adapté pour entraîner l'excentrique 50 à une vitesse de rotation sensiblement constante et de préférence comprise entre 240 et 70 tours/min. Ainsi, le premier organe tenseur 49 est adapté pour alterner les phases de mise sous tension des premiers filaments 23 et de relâchement de la tension appliquée sur les premiers filaments 23 à une fréquence comprise entre 240 et 70 Hz

Le premier bain de résine 48 est défini longitudinalement entre deux premiers rouleaux 60, 62 orientés chacun sensiblement transversalement. Il contient une première solution de résine disposée entre lesdits deux premiers rouleaux 60, 62.

La première solution de résine est liquide. De préférence, elle comprend une première résine diluée dans un premier diluant. La première résine est typiquement constituée par une résine thermoplastique, et le premier diluant par de l'eau : la première solution de résine est alors une résine thermoplastique à dispersion aqueuse. En variante, la première résine est constituée par une résine thermodure et/ou le premier diluant est constitué par un solvant. Avantageusement, la première solution de résine comprend également des additifs, par exemple des agents protecteurs anti ultraviolets, des agents protecteurs anti moisissures, des agents protecteurs anti abrasion, des antioxydants et/ou des antibactériens.

La première solution de résine a de préférence une viscosité dynamique, mesurée au moyen d'un viscosimètre tel qu'une coupe ISO, comprise entre 0 et 6000 mPa.s lors de son utilisation, de façon à permettre un bon étalement des premiers filaments 23.

La première résine a avantageusement un module viscoélastique, à 20°C, mesuré par un test d'analyse mécanique dynamique (mieux connu sous l'acronyme anglais DMA pour « Dynamic Mechanical Analysis »), compris entre 2.10^{e}5 Pa et 3.10^{e}8 Pa ; de préférence entre 2.10^{e}6 et 2.10^{e}7 Pa.

Les deux premiers rouleaux 60, 62 sont chacun cylindriques de révolution. Ils sont disposés sensiblement parallèlement l'un à l'autre et sont chacun montés mobiles relativement au bâti autour de leurs axes 64, 66 respectifs. Avantageusement, ils ont des diamètres sensiblement égaux.

Les deux premiers rouleaux 60, 62 définissent entre eux un intervalle 68 au niveau duquel l'espacement entre les deux premiers rouleaux 60, 62 est minimal ; cet intervalle 68 est défini par la portion d'espace localisée entre les deux premiers rouleaux 60, 62, dans le plan défini par les axes 64, 66.

Cet intervalle 68 constitue un fond du premier bain de résine 48. En d'autres termes, l'espace défini entre les deux rouleaux 60, 62 au-dessus de l'intervalle 68 est rempli de résine et constitue ainsi le bain de résine 48, alors que l'espace défini entre les deux rouleaux 60, 62 en-dessous de l'intervalle 68 est laissé libre.

De préférence, l'intervalle 68 est suffisamment étroit pour que, lorsque les rouleaux 60, 62 sont immobiles relativement au bâti, le débit de résine à travers l'intervalle 68 soit sensiblement nul.

Le premier poste d'étalement et d'enduction 34 est configuré pour que les premiers filaments 23 entrent dans le premier bain de résine 48 par une surface supérieure 70 du bain de résine 48, et sortent du premier bain de résine 48 par l'intervalle 68.

Le premier poste d'étalement et d'enduction 34 comprend également un système (non représenté) d'entraînement des premiers rouleaux 60, 62 autour de leurs axes respectifs 64, 66. Ce système d'entraînement est adapté pour entraîner les premiers rouleaux 60, 62 de sortent qu'ils tournent dans des sens opposés l'un vers l'autre, c'est-à-dire de sorte que, lorsque les premiers rouleaux 60, 62 sont vus de côté, à l'endroit, le rouleau positionné à droite tourne dans le sens trigonométrique et le rouleau positionné à gauche tourne dans le sens des aiguilles d'une montre.

Le système d'entraînement est également adapté pour entraîner les premiers rouleaux 60, 62 à des vitesses de rotation différentes. Il est en particulier configuré pour entraîner un premier rouleau primaire 60 desdits premiers rouleaux 60, 62 à une première vitesse de rotation primaire, et pour entraîner un premier rouleau secondaire 62 desdits premiers rouleaux 60, 62 à une première vitesse de rotation secondaire différente de la première vitesse de rotation primaire. La première vitesse de rotation primaire est adaptée pour que la vitesse de déplacement des points de la surface périphérique du rouleau primaire 60 soit sensiblement égale à une première vitesse d'entraînement des premiers filaments 23 à travers l'installation 12. La différence de vitesse entre les premières vitesses de rotation primaire et secondaire est de préférence inférieure à 2%.

Le premier rouleau secondaire 62 est disposé entre le bain de résine 48 et le poste de séchage 36.

Le premier poste d'étalement et d'enduction 34 comprend également un dispositif 72 de fourniture d'un film antiadhésif primaire 74, pour l'application du premier voile de filaments et de résine, en sortie du premier bain de résine 48, sur ledit film antiadhésif primaire 74.

Le dispositif de fourniture 72 est adapté pour fournir le film antiadhésif primaire 74 de manière à ce que ce film 74 passe dans le premier bain de bain de résine 48 en longeant le premier rouleau primaire 64, en pénétrant dans le premier bain de résine 48 par sa surface 70 et en sortant de premier bain de résine 48 par son fond.

Le film antiadhésif primaire 74 est guidé, en aval du premier bain de résine 48, de manière à accompagner le premier voile de filaments vers le premier poste de séchage 36.

Le premier poste d'étalement et d'enduction 34 comprend également un dispositif 75 de fourniture d'un film antiadhésif secondaire 77, pour l'application dudit film adhésif secondaire 77, en sortie du premier bain de résine 48, sur le premier voile de filaments et de résine.

Le dispositif de fourniture 75 est adapté pour fournir le film antiadhésif secondaire 77 de manière à ce que ce film 77 passe dans le premier bain de bain de résine 48 en longeant le premier rouleau secondaire 62, en pénétrant dans le premier bain de résine 48 par sa surface 70 et en sortant du premier bain de résine 48 par son fond.

Le film antiadhésif secondaire 77 est guidé, en aval du premier bain de résine 48, de manière à accompagner le premier voile de filaments vers le premier poste de séchage 36.

Ainsi, en sortie du premier bain de résine 48, le premier voile de filaments est pris en sandwich entre les films antiadhésifs primaire et secondaire 74, 77. Cela permet d'assurer que les premiers filaments 23 demeurent écartés les uns des autres en aval du premier bain de résine 48.

De préférence, chacun des films antiadhésifs primaire et secondaire 74, 77 est perméable à la vapeur d'eau, de manière à permettre l'évaporation de la dispersion aqueuse lorsque le premier voile de filaments traverse le premier poste de séchage. A cet effet, chacun des films antiadhésifs primaire et secondaire 74, 77 est typiquement constitué de papier siliconé.

Le premier poste de séchage 36 est adapté pour chauffer le premier voile de filaments de manière à provoquer l'évaporation de la dispersion aqueuse contenue dans la résine. A cet effet, le premier poste de séchage 36 comprend typiquement un premier pont chauffant 76 traversé par le premier voile de filaments et de résine pris en sandwich entre les films antiadhésifs primaire et secondaire 74, 77. Ce pont chauffant 76 s'étend suivant la direction longitudinale sur une première longueur, ladite première longueur étant de préférence adaptée pour que la durée de traversée du premier pont chauffant 76 par le premier voile de filaments soit supérieure ou égale à 12 secondes. A cet effet, la longueur, en mètres, du pont chauffant 76 est supérieure ou égale à 20% de la première vitesse d'entraînement, donnée en mètres par minute.

Le premier poste de fabrication 20 comprend également un poste 78 de retrait du film antiadhésif secondaire 77, adapté pour écarter le film antiadhésif secondaire 77 de la première bande composite 22 obtenue par le séchage du premier voile de filaments, de manière à libérer une face supérieure de la première bande composite 22.

Ce poste de retrait 78 comprend typiquement un cylindre 79 disposé au-dessus de la première bande composite 22, au-dessus du premier poste de séchage 36, et autour duquel le film antiadhésif secondaire 77 est au moins partiellement enroulé.

Dans l'exemple représenté, le poste de retrait 78 comprend un cylindre de stockage du film antiadhésif secondaire 77, autour duquel le film antiadhésif secondaire 77 est enroulé. En variante (non représentée), le film antiadhésif secondaire 77 est relié à ses deux extrémités longitudinales opposées, de sorte que le film antiadhésif secondaire 77 forme une boucle entre son poste de fourniture 75 et son poste de retrait 78..

Les premier et deuxième postes de fabrication 20, 24 sont disposés successivement suivant la direction longitudinale, le deuxième poste de fabrication 24 étant disposé en aval du premier poste de fabrication 20.

Le deuxième poste de fabrication 24 comprend un deuxième poste 80 de fourniture des deuxièmes filaments sous forme de deuxièmes fibres 81, un deuxième poste 82 de traitement des deuxièmes fibres 81, en aval du deuxième poste de fourniture 80, un deuxième poste 84 d'étalement et d'enduction des deuxièmes filaments pour former un deuxième voile de filaments et de résine, en aval du deuxième poste de traitement 82, et un deuxième poste 86 de séchage du deuxième voile de filaments et de résine, en aval du deuxième poste d'étalement et d'enduction 86. Ces deuxièmes postes 80, 82, 84, 86 sont juxtaposés successivement les uns à la suite des autres suivant la direction longitudinale, et chaque deuxième filament s'étend au travers de tous les deuxièmes postes 80, 82, 84, 86 de sorte que chaque point d'un deuxième filament passe, au cours du fonctionnement du deuxième poste de fabrication 24, successivement par chacun des deuxièmes postes 80, 82, 84, 86.

Les deuxièmes filaments sont en un matériau différent du matériau constituant les premiers filaments. Les deuxièmes filaments sont typiquement des filaments d'UHMWPE, par exemple des filaments de Dyneema® ou de Spectra®. En variante, les deuxièmes filaments sont des filaments d'aramide. En variante encore, les premiers filaments 23 sont des filaments de carbone, de Vectran®, ou de polyester.

Le deuxième poste de fourniture 80 comprend un deuxième cantre 90 supportant une pluralité de deuxièmes bobines de fourniture (non représentées) autour desquelles sont enroulées une pluralité de deuxièmes fibres 81. Chaque deuxième fibre 81 est formée d'une pluralité de deuxièmes filaments regroupés en faisceau.

Chaque deuxième bobine de fourniture est montée mobile en rotation relativement au bâti du deuxième cantre 90 autour d'un axe transversal, et les deuxièmes fibres 81 sont extraites du deuxième cantre 90 suivant la direction longitudinale.

Le deuxième poste de traitement 82 est adapté pour traiter les deuxièmes fibres 81 de manière à faciliter un étalement ultérieur des premiers filaments 23 composant les premières fibres 31. A cet effet, le premier poste de traitement est adapté pour détruire un élément de cohésion (non représenté) qui assure la cohésion des deuxièmes filaments entre eux au sein de chaque deuxième fibre 81. Cet élément est le plus souvent constitué par une matrice enzymatique dont est enduite chaque deuxième fibre 81. En variante, l'élément de cohésion est constitué par des ligatures réparties le long de la deuxième fibre 81.

Le deuxième poste de traitement 82 est de préférence adapté pour brûler l'élément de cohésion de chaque deuxième fibre 81. A cet effet, le deuxième poste de traitement 82 comprend un deuxième organe de chauffage 94 adapté pour chauffer chaque deuxième fibre 81 à une température supérieure à une température de combustion de l'élément de cohésion de la deuxième fibre 81. Le deuxième organe de chauffage 94 est de préférence un organe de chauffage par rayonnement, en particulier par rayonnement infrarouge.

En variante (non représentée), le deuxième poste de traitement 82 est adapté pour dissoudre l'élément de cohésion de chaque deuxième fibre 81. A cet effet, le deuxième poste de traitement 82 comprend typiquement un bain de lavage des deuxièmes fibres 81.

Le deuxième poste d'étalement et d'enduction 84 est adapté pour étaler les deuxièmes filaments les uns à l'écart des autres, et pour enduire lesdits deuxièmes filaments avec une résine de manière à former le deuxième voile de filaments et de résine. A cet effet, le deuxième poste d'étalement et d'enduction 84 comprend un deuxième poste 96 de pré-étalement des deuxièmes filaments et un deuxième bain de résine 98, disposés successivement suivant la direction longitudinale, le deuxième poste de pré-étalement 96 étant en amont du deuxième bain de résine 98.

Le deuxième poste de pré-étalement 96 comprend un deuxième organe tenseur 99 adapté pour alternativement mettre une portion aval des deuxièmes filaments, disposée en aval de l'organe tenseur 99, entre le deuxième organe tenseur 99 et le deuxième bain de résine 98, sous tension suivant une direction parallèle à un axe d'extension de ladite portion aval, et relâcher la tension appliquée sur ladite portion aval.

A cet effet, le deuxième organe tenseur 99 comprend un deuxième excentrique 100 disposé sur le passage des deuxièmes filaments entre le deuxième poste de traitement 82 et le deuxième bain de résine 98, et un dispositif (non représenté) d'entraînement de l'excentrique 100 en rotation relativement au bâti autour d'un axe de rotation transversal 102.

L'excentrique 100 a une forme de cylindre (terme à comprendre dans son acception la plus large), en particulier de cylindre elliptique. L'excentrique 100 présente ainsi une surface périphérique cylindrique 104. Cette surface cylindrique 104 est de préférence C¹, c'est-à-dire qu'elle est dépourvue d'arrêté.

La surface cylindrique 104 est à une distance variable de l'axe de rotation 102, c'est-à-dire que tout point de la surface cylindrique 104 n'est pas à la même distance de l'axe de rotation 102 que chaque autre point de la surface cylindrique.

Une partie de la surface cylindrique 104 constitue une surface de contact avec les deuxièmes filaments. Cette surface de contact est fixe angulairement relativement au bâti. Ainsi, au cours de la rotation de l'excentrique 100 autour de l'axe 102, la surface de contact se déplace le long de la surface cylindrique 104. La surface cylindrique 104 étant à une distance variable de l'axe de rotation 102, l'excentrique 100 est donc configuré pour que la distance de la surface de contact à l'axe de rotation 102 varie, au cours de la rotation de l'excentrique 100 autour de l'axe 102, entre une distance minimale et une distance maximale.

L'excentrique 100 est disposé de sorte que, lorsque la surface de contact est à sa distance maximale de l'axe 102, cela corresponde à une configuration dans laquelle le parcours des deuxièmes filaments entre le deuxième poste de traitement 82 et le deuxième bain de résine 98 est maximal, et que, lorsque la surface de contact est à sa distance minimale de l'axe 102, cela corresponde à une configuration dans laquelle le parcours des deuxièmes filaments entre le deuxième poste de traitement 82 et le deuxième bain de résine 98 est minimal. Ainsi, lorsque la surface de contact est à sa distance maximale de l'axe 102, les deuxièmes filaments sont sous tension et, lorsque la surface de contact est à sa distance minimale de l'axe 102, les deuxièmes filaments sont relâchés.

Les deuxièmes filaments sont disposés de manière à ce que leur portion aval soit orientée suivant une direction sensiblement verticale, c'est-à-dire de sorte que l'axe d'extension de ladite portion aval s'étende sensiblement verticalement. Les deuxièmes filaments sont également disposés de manière à avoir une portion amont, disposée en amont du deuxième organe tenseur 99, entre le deuxième organe tenseur 99 et le deuxième poste de traitement 82, qui soit orientée suivant une direction non verticale. Cette direction est, dans l'exemple représenté, une direction sensiblement horizontale ; en variante, il s'agit d'une direction inclinée.

Le dispositif d'entraînement comprend typiquement un moteur électrique et un module de commande du moteur électrique (non représentés). Le dispositif d'entraînement est adapté pour entraîner l'excentrique 100 à une vitesse de rotation sensiblement constante et de préférence comprise entre 240 et 70 tours/min. Ainsi, le deuxième organe tenseur 99 est adapté pour alterner les phases de mise sous tension des deuxièmes filaments et de relâchement de la tension appliquée sur les deuxièmes filaments à une fréquence comprise entre 240 et 70 Hz.

Le deuxième bain de résine 98 est défini longitudinalement entre deux deuxièmes rouleaux 110, 112 orientés chacun sensiblement transversalement. Il comprend une deuxième solution de résine disposée entre lesdits deux deuxièmes rouleaux 110, 112.

La deuxième solution de résine est liquide. De préférence, elle comprend une deuxième résine diluée dans un deuxième diluant. La deuxième résine est typiquement constituée par une résine thermoplastique, et le deuxième diluant par de l'eau : la deuxième solution de résine est alors une résine thermoplastique à dispersion aqueuse. En variante, la deuxième résine est constituée par une résine thermodure et/ou le deuxième diluant est constitué par un solvant. Avantageusement, la deuxième solution de résine comprend également des additifs, par exemple des agents protecteurs anti ultraviolets, des agents protecteurs anti moisissures, des agents protecteurs anti abrasion, des antioxydants et/ou des antibactériens.

La deuxième solution de résine a de préférence une viscosité dynamique, mesurée au moyen d'un viscosimètre tel qu'une coupe ISO, comprise entre 0 et 6000 mPa.s lors de son utilisation, de façon à permettre un bon étalement des deuxièmes filaments.

La deuxième résine est compatible avec la première résine. Elle a avantageusement un module viscoélastique, à 20°C, mesuré par un test DMA, compris entre 2.10^{e}5 Pa et 3.10^{e}8 Pa, de préférence entre 2.10^{e}6 et 2.10^{e}7 Pa.

La deuxième solution de résine est par exemple identique à la première solution de résine.

Les deux deuxièmes rouleaux 110, 112 sont chacun cylindriques de révolution. Ils sont disposés sensiblement parallèlement l'un à l'autre et sont chacun montés mobiles relativement au bâti autour de leurs axes 114, 116 respectifs. Avantageusement, ils ont des diamètres sensiblement égaux.

Les deux deuxièmes rouleaux 110, 112 définissent entre eux un intervalle 118 au niveau duquel l'espacement entre les deux deuxièmes rouleaux 110, 112 est minimal ; cet intervalle 118 est défini par la portion d'espace localisée entre les deux deuxièmes rouleaux 110, 112, dans le plan défini par les axes 114, 116.

Cet intervalle 118 constitue un fond du deuxième bain de résine 98. En d'autres termes, l'espace défini entre les deux rouleaux 110, 112 au-dessus de l'intervalle 118 est rempli de résine et constitue ainsi le deuxième bain de résine 98, alors que l'espace défini entre les deux rouleaux 110, 112 en-dessous de l'intervalle 118 est laissé libre.

De préférence, l'intervalle 118 est suffisamment étroit pour que, lorsque les rouleaux 110, 112 sont immobiles relativement au bâti, le débit de résine à travers l'intervalle 118 soit sensiblement nul.

Le deuxième poste d'étalement et d'enduction 84 est configuré pour que les deuxièmes filaments entrent dans le deuxième bain de résine 98 par une surface supérieure 120 du bain de résine 98, et sortent du deuxième bain de résine 98 par l'intervalle 118.

Le deuxième poste d'étalement et d'enduction 84 comprend également un système (non représenté) d'entraînement des deuxièmes rouleaux 110, 112 autour de leurs axes respectifs 114, 116. Ce système d'entraînement est adapté pour entraîner les deuxièmes rouleaux 110, 112 de sortent qu'ils tournent dans des sens opposés l'un vers l'autre, c'est-à-dire de sorte que, lorsque les deuxièmes rouleaux 110, 112 sont vus de côté, à l'endroit, le rouleau positionné à droite tourne dans le sens trigonométrique et le rouleau positionné à gauche tourne dans le sens des aiguilles d'une montre.

Le système d'entraînement est également adapté pour entraîner les deuxièmes rouleaux 110, 112 à des vitesses de rotation différentes. Il est en particulier configuré pour entraîner un deuxième rouleau primaire 110 desdits deuxièmes rouleaux 110, 112 à une deuxième vitesse de rotation primaire, et pour entraîner un deuxième rouleau secondaire 112 desdits deuxièmes rouleaux 110, 112 à une deuxième vitesse de rotation secondaire différente de la deuxième vitesse de rotation primaire. La deuxième vitesse de rotation primaire est adaptée pour que la vitesse de déplacement des points de la surface périphérique du rouleau primaire 110 soit sensiblement égale à une deuxième vitesse d'entraînement des premiers filaments 23 à travers l'installation 12. La différence de vitesse entre les deuxièmes vitesses de rotation primaire et secondaire est de préférence inférieure à 2%.

Le deuxième rouleau secondaire 112 est disposé entre le bain de résine 98 et le poste de séchage 86.

La deuxième vitesse d'entraînement est de préférence sensiblement égale à la première vitesse d'entraînement.

Le deuxième poste d'étalement et d'enduction 84 est adapté pour que le deuxième voile de filaments et de résine, en sortie du deuxième bain de résine 98, soit appliqué sur la première bande composite 22. A cet effet, le deuxième poste d'étalement et d'enduction 84 comprend un dispositif 122 de guidage de la première bande composite 22 sortant du premier poste de séchage 36 sous le deuxième rouleau primaire 110 jusqu'à une face inférieure 124 du deuxième rouleau secondaire 112.

Le deuxième poste d'étalement et d'enduction 84 comprend également un dispositif 125 de fourniture d'un film antiadhésif tertiaire 127, pour l'application dudit film adhésif tertiaire 127, en sortie du deuxième bain de résine 98, sur le deuxième voile de filaments et de résine.

Le dispositif de fourniture 125 est adapté pour fournir le film antiadhésif tertiaire 127 de manière à ce que ce film 127 passe dans le deuxième bain de résine 98 en longeant le deuxième rouleau secondaire 112, en pénétrant dans le deuxième bain de résine 98 par sa surface 120 et en sortant du deuxième bain de résine 98 par son fond.

Le film antiadhésif tertiaire 127 est guidé, en aval du deuxième bain de résine 98, de manière à accompagner le deuxième voile de filaments vers le deuxième poste de séchage 86.

Ainsi, en sortie du deuxième bain de résine 98, le deuxième voile de filaments est pris en sandwich entre la première bande composite 22 et le film antiadhésif tertiaire 127. Cela permet d'assurer que les deuxièmes filaments 23 demeurent écartés les uns des autres en aval du deuxième bain de résine 98.

De préférence, le film antiadhésif tertiaire 127 est perméable à la vapeur d'eau, de manière à permettre l'évaporation de la dispersion aqueuse lorsque le deuxième voile de filaments traverse le deuxième poste de séchage 126. A cet effet, le film antiadhésif tertiaire 127 est typiquement constitué de papier siliconé.

Le deuxième poste de séchage 86 est adapté pour chauffer le deuxième voile de filaments de manière à provoquer l'évaporation de la dispersion aqueuse contenue dans la résine. A cet effet, le deuxième poste de séchage 86 comprend typiquement un deuxième pont chauffant 126 traversé par le deuxième voile de filaments et de résine pris en sandwich entre la première bande composite 22 et le film antiadhésif tertiaire 127. Ce pont chauffant 126 s'étend suivant la direction longitudinale sur une deuxième longueur, ladite deuxième longueur étant supérieure à la première longueur, et étant de préférence adaptée pour que la durée de traversée du deuxième pont chauffant 126 par le deuxième voile de filaments soit supérieure ou égale à 24 secondes. A cet effet, la longueur, en mètres, du pont chauffant 126 est supérieure ou égale à 40% de la deuxième vitesse d'entraînement, donnée en mètres par minute.

Le deuxième poste de fabrication 24 comprend également un poste 129 de retrait du film antiadhésif tertiaire 127, adapté pour écarter le film antiadhésif tertiaire 127 du deuxième voile de filaments au cours de son séchage.

Ce poste de retrait 129 comprend typiquement un cylindre 130 disposé au-dessus du pont chauffant 126 et autour duquel le film antiadhésif tertiaire 127 est au moins partiellement enroulé.

Dans l'exemple représenté, le poste de retrait 129 comprend un cylindre de stockage du film antiadhésif tertiaire 127, autour duquel le film antiadhésif tertiaire 127 est enroulé. En variante (non représentée), le film antiadhésif tertiaire 127 est relié à ses deux extrémités longitudinales opposées, de sorte que le film antiadhésif tertiaire 127 forme une boucle entre son poste de fourniture 125 et son poste de retrait 129..

Optionnellement, le deuxième poste de fabrication 24 comprend également un dispositif 128 d'application d'un organe de maintien (non représenté) sur le deuxième voile, de manière à maintenir les filaments étalés à l'écart les uns des autres après leur séchage. Cet organe de maintien est typiquement constitué par une grille de renforcement (ou « scrim » en anglais) appliquée sur la face du deuxième voile opposée à celle en contact avec la première bande composite 22 et qui adhère au deuxième voile au cours de son séchage.

Le dispositif d'application 128 est alors disposé, comme représenté, au-dessus du pont chauffant 126. Le dispositif d'application 128 est en particulier disposé en aval du cylindre 130.

Le poste d'enroulement 28 est constitué par une bobine 130 d'enroulement de la bande composite hybride 26 en sortie du deuxième poste de séchage 86. Cette bobine 130 est entraînée en rotation autour de son axe relativement au bâti ; de préférence, sa vitesse de rotation est adaptée pour que la vitesse de déplacement des points de la surface périphérique de la bobine 130 soit sensiblement égale aux première et deuxième vitesses d'entraînement.

En variante (non représentée), le poste d'enroulement 28 comprend une pluralité de bobines d'enroulement juxtaposées les unes aux autres, et l'installation de fabrication 12 comprend, en amont du poste d'enroulement 28, entre le deuxième poste de fabrication 22 et le poste d'enroulement 28, un poste de découpe adapté pour découper la bande composite hybride 26 en une pluralité de bandelettes composites hybrides chacune enroulée par le poste d'enroulement 28 sur une bobine d'enroulement respective.

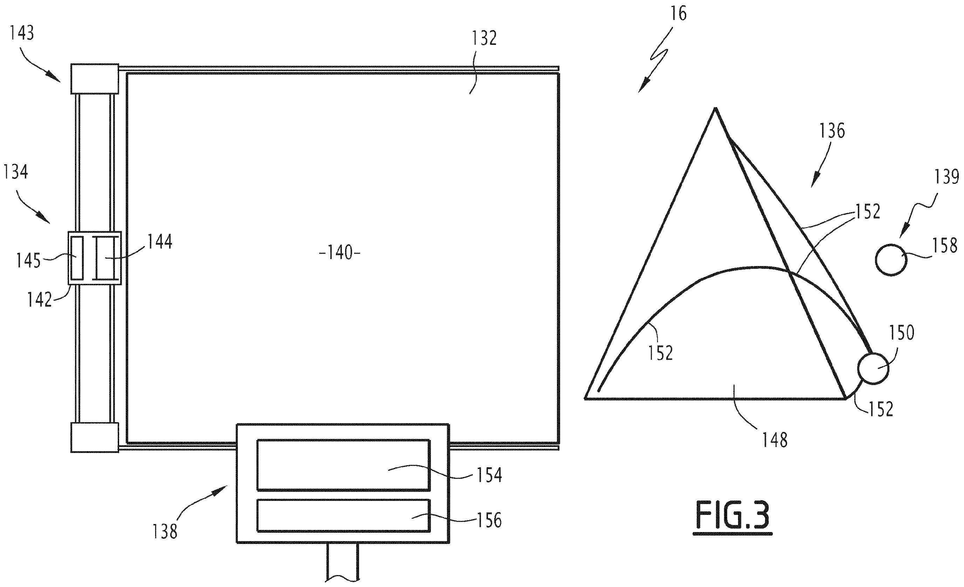

En référence à la Figure 3, le poste d'assemblage-laminage 16 comprend un support 132 de réception de bandelettes de composite, constituées par des tronçons de bandes composites hybrides 26 fabriquées au moyen de l'installation 12, un automate 134 de dépose des bandelettes de composite sur le support 132, suivant un motif prédéterminé, un dispositif 136 de mise sous vide des plaques de composite déposées sur le support 132, une machine 138 de laminage des plaques de composite déposées sur le support 132, et un dispositif 139 de démoulage des plaques de composite laminées.

Le support 132 est typiquement constitué par un sol. Il présente une surface 140 de réception des plaques de composite. Cette surface de réception 140 est de préférence plane. En option, la surface de réception 140 est recouverte par un élément de démoulage, tel qu'un film de démoulage ou un produit de démoulage

L'automate 134 comprend une tête de dépose 142 et un dispositif 143 de déplacement de la tête 142 adapté pour déplacer la tête de déposée 142 en tout point de la surface de dépose 140.

La tête de dépose 142 contient un logement 144 de réception d'une bande de matériau, un système (non représenté) d'application de ladite bande de matériau contre la surface de réception 140, et un organe 145 de découpe de la bande de matériau.

Le logement de réception 144 est adapté pour recevoir la bande enroulé autour d'une bobine. En cet effet, le logement de réception 144 comprend un axe (non représenté) de réception de ladite bobine.

Le système d'application comprend un système d'entraînement de la bande de matériau et un rouleau d'application.

Le système d'entraînement comprend une partie mécanique, formée par deux rouleaux entraîneurs, parallèles l'un à l'autre, entre lesquels passe la bande de matériau, et une partie aérodynamique, formée par un organe d'aspiration de la bande de matériau, adaptée pour guider la bande de matériau sous le rouleau d'application.

Le rouleau d'application est orienté parallèlement aux rouleaux entraîneurs et monté mobile en translation sur la tête de dépose 142 par rapport aux rouleaux entraîneurs entre une position rétractée, dans laquelle il est proche des rouleaux entraîneurs, et une position déployée, dans laquelle il est éloigné des rouleaux entraîneurs..

L'organe de découpe 145 est typiquement interposé entre le système d'entraînement et le rouleau d'application.

Le dispositif de mise sous vide 136 comprend un couvercle souple 148, adapté pour être positionné au-dessus d'un empilement de bandelettes de composite sur la surface de réception 140, une pompe à vide 150, et une pluralité de tuyaux 152 raccordant fluidiquement une face inférieure du couvercle 148, destinée à venir en contact avec le support 132, à la pompe à vide 150.

La machine de laminage 138 est adaptée pour se déplacer en tout point de la surface de réception 140. Elle comprend un dispositif 154 de chauffage par rayonnement, typiquement par rayonnement infrarouge, et un rouleau compresseur 156.

Le dispositif de chauffage 154 est par exemple constitué par au moins une lampe, telle qu'une lampe infrarouge, de préférence par une pluralité de lampes.

Le rouleau compresseur 156 est adapté pour exercer une pression comprise entre 5 et 7 kg/cm² en tout point de la surface de réception 140. Le rouleau compresseur 156 est de préférence un rouleau compresseur chauffant.

Ensemble, le dispositif de chauffage 154 et le rouleau compresseur 156 sont adaptés pour chauffer des plaques de composite déposées sur la surface de réception 140 à une température comprise entre 90 et 130°C, de préférence comprise entre 100 et 120°C.

Le dispositif de démoulage 139 est constitué par un dispositif d'injection d'air pour injecter de l'air entre le couvercle 148 et les plaques de composite laminées. Ce dispositif d'injection d'air comprend, dans l'exemple représenté, un compresseur à air adapté pour être raccordé fluidiquement aux tuyaux 152 à la place de la pompe à vide 150.

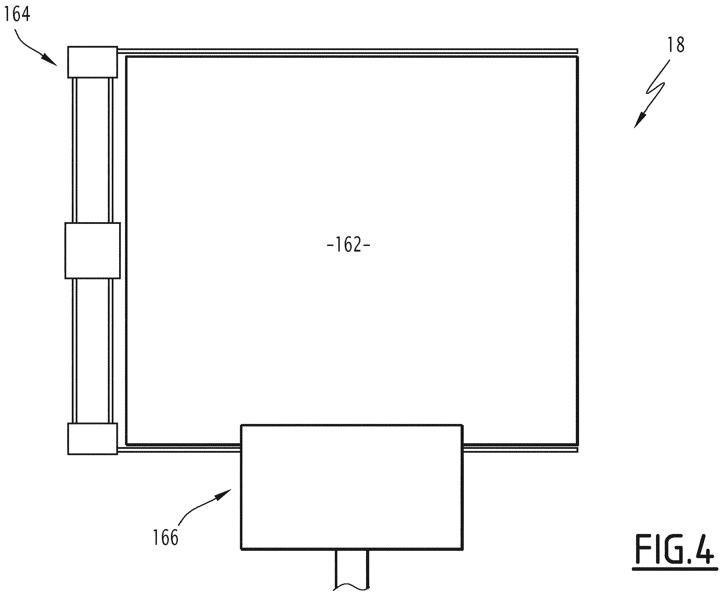

Le poste de découpage-soudage 18 comprend, en référence à la Figure 4, une surface plane 162 de manipulation d'une membrane souple, un outil 164 de découpage de la membrane en panneaux, et un dispositif 166 de soudage des panneaux les uns aux autres pour former une voile de bateau. Le dispositif de soudage 166 est typiquement constitué par une presse chauffante.

Dans l'exemple représenté, la surface de manipulation 162 du poste de découpage-soudage 18 est distincte de la surface de réception 140 du poste d'assemblage-laminage 16, ce qui nécessite de déplacer la membrane souple entre les postes d'assemblage-laminage 16 et de découpage-soudage 18. En variante (non représentée), les surfaces de réception 140 et de manipulation 162 sont confondues.

Un procédé de production d'une voile de bateau au moyen de l'installation de production 10 va maintenant être décrit, en référence aux Figures 1 à 5.

Tout d'abord, des bandes composites hybrides sont fabriquées. A cet effet, les systèmes d'entraînement en rotation des excentriques 50, 100, des rouleaux primaires et secondaires 60, 62, 110, 112 et de la bobine 130 sont mis en marche.

Sous l'effet de la tension exercée sur les premiers filaments 23 par le premier rouleau primaire 60, les premières fibres 31 se déroulent des premières bobines de fourniture montées sur le premier cantre 40. Elles passent au travers du premier poste de traitement 32, où leur élément de cohésion est retiré.

Les premières fibres 31 parviennent ensuite au premier poste de pré-étalement 46, où l'excentrique 50 tourne autour de son axe de rotation 52 à une fréquence de rotation comprise entre 240 et 70 tours/min. Sous l'effet de la rotation de l'excentrique 50, les premiers filaments 23 constituant les premières fibres 31 alternent entre les phases de mise sous tension et de relâchement, les phases de mise sous tension étant constituées par les phases au cours desquelles la distance de la surface de contact à l'axe de rotation 52 varie de sa distance minimale à sa distance maximale, et les phases de relâchement étant constituées par les phases au cours desquelles la distance de la surface de contact à l'axe de rotation 52 varie de sa distance maximale à sa distance minimale.

Lors des phases de relâchement, la partie aval des premiers filaments 23, disposée en aval de l'excentrique 50, est comprimée par son propre poids, ce qui favorise l'écartement des premiers filaments 23 constituant une même fibre 31 à l'écart les uns des autres sous l'effet d'une force transversale.

Les premiers filaments 23 pénètrent ensuite dans le premier bain de résine 48. Du fait de la viscosité de la première solution de résine, cette pénétration des premiers filaments 23 dans le bain de résine 48, couplée à l'entraînement des premiers filaments 23 vers le fond du bain de résine 48 par les premiers rouleaux 60, 62, entraîne la formation d'un vortex 160 à la surface 70 du premier bain de résine 48, autour de chaque première fibre 31. Le fait que les premiers rouleaux 60, 62 tournent autour de leurs axes respectifs dans des sens opposés l'un vers l'autre contribue également à la formation des vortex 160.

Comme visible sur la Figure 5, chaque vortex 160 ainsi formé exerce une force transversale F sur la première fibre 31 autour de laquelle il est formé. Sous l'effet de cette force F, la première fibre 31 finit de se décomposer, et les filaments 23 qui la composent s'étalent à l'écart les uns des autres.

Dans le premier bain de résine 48, la première solution de résine enduit les premiers filaments 23, et c'est ainsi un premier voile formé des premiers filaments 23 enduits de ladite première solution de résine qui sort du bain 48 par l'intervalle 68.

Ce premier voile est pris en sandwich entre les films antiadhésifs primaire et secondaire 74, 77 qui longent les rouleaux 60, 62 et viennent enserrer le premier voile à sa sortie du bain 48 à hauteur d'un plan équatorial reliant l'un à l'autre les axes 64, 66 des premiers rouleaux 60, 62.

Le premier voile est en grande partie séché sur le pont chauffant 76, de manière à vaporiser la majeure partie du premier diluant, et c'est ainsi une première bande composite 22 qui est obtenue en sortie du premier poste de séchage 36.

Le film antiadhésif secondaire 77 est retiré de la première bande composite 22 après son séchage, de manière à libérer une face supérieure de la première bande composite 22.

Simultanément, sous l'effet de la tension exercée sur les deuxièmes filaments par le deuxième rouleau primaire 110, les deuxièmes fibres 81 se déroulent des deuxièmes bobines de fourniture montées sur le deuxième cantre 90. Elles passent au travers du deuxième poste de traitement 82, où leur élément de cohésion est retiré.

Les deuxièmes fibres 81 parviennent ensuite au deuxième poste de pré-étalement 96, où l'excentrique 100 tourne autour de son axe de rotation 102 à une fréquence de rotation comprise entre 240 et 70 tours/min. Sous l'effet de la rotation de l'excentrique 100, les deuxièmes filaments constituant les deuxièmes fibres 81 alternent entre les phases de mise sous tension et de relâchement, les phases de mise sous tension étant constituées par les phases au cours desquelles la distance de la surface de contact à l'axe de rotation 102 varie de sa distance minimale à sa distance maximale, et les phases de relâchement étant constituées par les phases au cours desquelles la distance de la surface de contact à l'axe de rotation 102 varie de sa distance maximale à sa distance minimale.

Lors des phases de relâchement, la partie aval des deuxièmes filaments, disposée en aval de l'excentrique 100, est comprimée par son propre poids, ce qui favorise l'écartement des deuxièmes filaments constituant une même fibre 81 à l'écart les uns des autres sous l'effet d'une force transversale.

Les deuxièmes filaments pénètrent ensuite dans le deuxième bain de résine 98. Du fait de la viscosité de la deuxième solution de résine, cette pénétration des deuxièmes filaments dans le bain de résine 98, couplée à l'entraînement des deuxièmes filaments vers le fond du bain de résine 98 par les deuxièmes rouleaux 110, 112 et à la rotation des deuxièmes rouleaux 110, 112 autour de leurs axes respectifs dans des sens opposés l'un vers l'autre, entraîne, de façon similaire à ce qui a été décrit avec les premières fibres 31, la formation d'un vortex à la surface 120 du deuxième bain de résine 98 autour de chaque deuxième fibre 81, et l'étalement des filaments composant chaque deuxième fibre 81 sous l'effet d'une force transversale exercée sur ladite fibre 81 par le vortex ainsi formé.

Dans le deuxième bain de résine 98, la deuxième solution de résine enduit ensuite les deuxièmes filaments, et c'est ainsi un deuxième voile formé des deuxièmes filaments enduits de ladite deuxième solution de résine qui sort du bain 98 par l'intervalle 118. Ce deuxième voile est alors plaqué contre le film antiadhésif tertiaire 127 qui sort lui aussi du bain 98 par l'intervalle 118.

Le deuxième voile vient ensuite en contact avec la face supérieure de la première bande composite 22 sortant du premier poste de séchage 36 et guidée jusqu'à la surface inférieure 124 du deuxième rouleau secondaire 112 par l'organe de guidage 122. Le deuxième voile est ainsi appliqué sur la première bande composite 22, les deuxièmes filaments étant orientés sensiblement parallèlement aux premiers filaments 23 de la première bande composite 22.

Le deuxième voile est ensuite séché sur le pont chauffant 126, de manière à vaporiser le deuxième diluant, et la première bande composite 22 finit de sécher sur le pont chauffant 126, de manière à finir de vaporiser le deuxième diluant. Les première et deuxième résines étant compatibles, le deuxième voile adhère ainsi à la première bande composite.

Au cours du séchage, le film antiadhésif tertiaire 127 est retiré du deuxième voile, de manière à libérer la face du deuxième voile opposée à celle en contact avec la première bande composite 22, puis une grille de renforcement est ensuite appliquée sur ladite face. Pendant la fin du séchage, la grille de renforcement adhère au deuxième voile.

On obtient ainsi, en sortie du deuxième poste de séchage 86, une bande composite hybride 26 formée de la réunion de la première bande composite 22, du deuxième voile de filaments séché, et de la grille de renforcement. Cette bande composite hybride 26 est enfin enroulée autour de la bobine 130.

Lorsque la bobine 130 est pleine, elle est remplacée dans l'installation 12 par une nouvelle bobine d'enroulement vide, et la bobine pleine est entreposée dans le poste d'entreposage 14. Ce remplacement est fait en continu, sans arrêter l'installation 12.

Ensuite, lors de l'assemblage de la membrane 17, une première feuille de matériau plastique polymérisé (non représentée), est déposée sur surface de réception 140. Cette première feuille de matériau plastique polymérisé est par exemple une feuille de matériau non-tissé ou un film en PET. Elle est avantageusement pré-imprégnée d'une résine compatible avec les première et deuxième résines.

Puis une première bobine de bande composite hybride 26, produite au moyen de l'installation 12, est chargée dans le logement 144 de la tête de dépose 142 de l'automate 134.

La tête de dépose 142 est ensuite déplacée au-dessus de la surface de réception 140 et dépose, sur la feuille de matériau plastique polymérisé, des bandelettes de composite formées de découpes de la bande composite hybride 26. A cet effet, la tête de dépose 142 est tout d'abord placée au-dessus d'un emplacement de la surface de réception 140 depuis lequel on souhaite faire commencer une bandelette de composite, puis le rouleau d'application est déployé de manière à venir appliquer la bande composite hybride 26 contre la feuille de matériau plastique polymérisé. Pendant le déploiement du rouleau d'application, la bande composite hybride 26 est déroulée au moyen des rouleaux entraîneurs et de l'organe d'aspiration, et est simultanément maintenue contre le rouleau d'application au moyen dudit organe d'aspiration. Une fois la bande composite hybride 26 appliquée contre la feuille de matériau plastique polymérisé, la bande composite hybride 26 est déroulée pendant que la tête de dépose 142 est déplacée jusqu'à un emplacement de la surface de réception 140 où l'on souhaite faire terminer la bandelette de composite ; une fois cet emplacement atteint, l'organe de découpe 145 sectionne la bande composite hybride 26, puis le rouleau d'application est rétracté. Les étapes précédentes sont ensuite répétées pour le dépôt des autres bandelettes de composite.

De préférence, la tête de dépose 142 dépose au moins cinq couches de bandelettes en chaque emplacement prédéterminé de la surface de réception 140, chaque bandelette étant déposée avec une orientation différente de l'orientation de chacune des autres bandelettes déposées au même emplacement.

Une fois que l'automate 134 a déposé toutes les couches de bandelettes sur la première feuille de matériau plastique polymérisé suivant un plan prédéterminé, une deuxième feuille de matériau plastique polymérisé (non représentée) est déposée par-dessus lesdites couches de bandelettes. Cette deuxième feuille de matériau plastique polymérisé est par exemple une feuille de matériau non-tissé ou un film en PET. Elle est avantageusement pré-imprégnée d'une résine compatible avec les première et deuxième résines.

Optionnellement, le procédé comprend également, préalablement à la dépose de la deuxième feuille de matériau plastique polymérisé, une ou plusieurs étapes successives de chargement d'autres bobines de bande de composite portant des bandes de composite différentes de celle portée par la première bobine.

Ensuite le couvercle 148 est plaqué contre la surface de réception 140 par-dessus les bandelettes déposées. La pompe à vide 150 est ensuite mise en route, de façon à faire le vide entre le couvercle 148 et la surface de réception 140. Enfin, la machine de laminage 138 est déplacée par-dessus le couvercle 148, la machine 138 chauffant les bandelettes de composite piégées sous le couvercle 148 à une température comprise entre 90 et 130°C, de préférence comprise entre 100 et 120°C, et comprimant les bandelettes de composite contre la surface de réception 140 en appliquant sur lesdites plaques une pression comprise entre 5 et 7 kg/cm².

Sous l'effet du chauffage et de la pression exercée, les résines composant les bandelettes de composite et les feuilles de matériau plastique polymérisé fluent et se mélangent les unes aux autres, assurant ainsi une cohésion entre les bandelettes et les feuilles déposées sur le support 140, formant ainsi la membrane.

Du fait de l'emploi d'une résine thermoplastique, cette cohésion est obtenue très rapidement lors du passage de la machine 138, de sorte qu'il n'est pas nécessaire de laisser ensuite la membrane sécher ou polymériser sur le support 132. La membrane 17 est ainsi obtenue très rapidement, ce qui permet une cadence de production élevée.

Pour démouler la membrane, le compresseur 158 est raccordé fluidiquement aux tuyaux 152, puis il est activé pour injecter de l'air dans les tuyaux 152. Cet air est conduit par les tuyaux 152 jusqu'à la face inférieure du couvercle 148, ce qui provoque une augmentation de pression à l'interface entre le couvercle 148 et la membrane 17 et/ou entre la surface de réception 140 et la membrane 17, et ainsi le démoulage de la membrane 17.

La membrane 17 ainsi obtenue présente une base 174 et deux côtés convergents 170, 172 convergeant l'un vers l'autre depuis la base 174.

La membrane 17 est ensuite déplacée sur la surface de manipulation 162, où, comme visible sur la Figure 6, elle est découpée en panneaux 178 par l'outil de découpe 164.

Pour chaque paire de panneaux 178 adjacents, les panneaux 178 constituant ladite paire sont séparés l'un de l'autre par une découpe 180 formée dans la membrane 17 par l'outil de découpe 164 à l'interface entre lesdits panneaux 178. Cette découpe 180 s'étend de l'un des grands côtés 170, 172 de la membrane 17 jusqu'au grand côté 170, 172 opposé et est bordée, d'un côté, par un premier bord 182 d'un premier des panneaux 178 composant la paire et, de l'autre côté, par un deuxième bord 184 du deuxième panneau 178 composant la paire, lesdits premier et deuxième bords 182, 184 se rejoignant à leurs extrémités respectives.

Au moins un desdits premier et deuxième bords 182, 184 est incurvé, avec une concavité orientée vers la découpe 180. Dans l'exemple représenté, un seul desdits bords 184 est incurvé, l'autre bord 182 étant droit. Le bord droit 182 est avantageusement, comme représenté, sensiblement parallèle à la base 174 de la membrane 17.

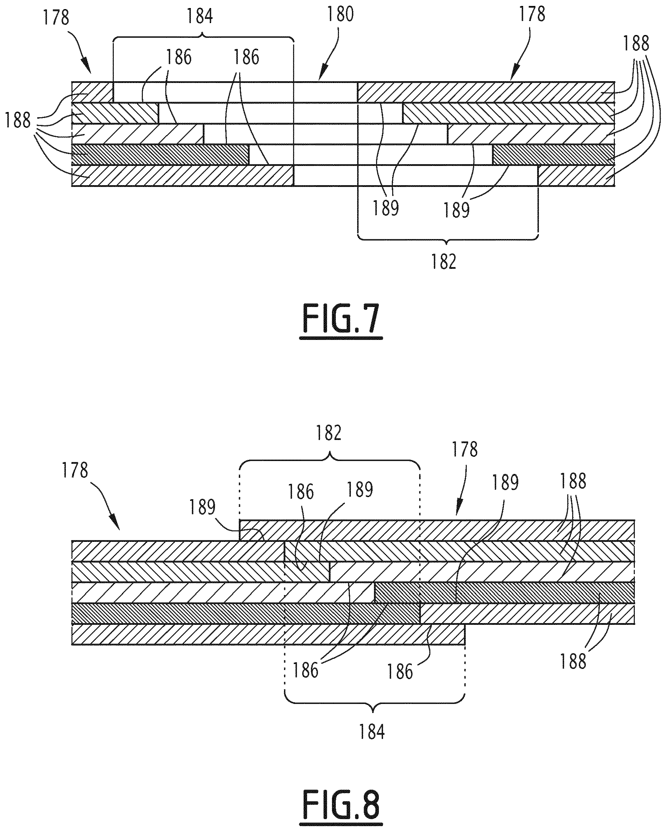

Chaque découpe 180 est réalisée en biseau, c'est-à-dire que, comme visible sur la Figure 7, les premier et deuxième bords 182, 184 des panneaux 178 encadrant ladite découpe 180 sont biseautés de manière à laisser dégagée, pour le premier bord 182, une portion de surface inférieure 189 de chacune des couches 188 de la membrane 17 et, pour le deuxième bord 184, une portion de surface supérieure 186 de chacune desdites couches 188.

Les panneaux 178 sont ensuite réunis de manière à former la voile. A cet effet, les premier et deuxième bords 182, 184 encadrant chaque découpe 180 sont rapprochés l'un de l'autre, comme visible sur la Figure 8, de manière à apposer chaque portion de surface inférieure 189 de chaque couche 188 laissée dégagée au niveau du premier bord 182 contre la portion de surface supérieure 186 de ladite couche 188 laissée dégagée au niveau du deuxième bord 184. Cela confère à la voile une forme tridimensionnelle en réalisant ce qui est communément appelé des « pinces ». Le fait que chaque portion de surface inférieure 189 de chaque couche 188 laissée dégagée au niveau du premier bord 182 soit apposée contre la portion de surface supérieure 186 de ladite couche 188 laissée dégagée au niveau du deuxième bord 184 permet de limiter la surépaisseur de la voile au niveau de ces pinces, et réduit les risques de rupture de la voile à ces endroits.

Une fois les panneaux 178 ainsi disposés, les panneaux 178 sont soudés les uns aux autres. A cet effet, le dispositif de soudage 166 chauffe et comprime simultanément les panneaux 178 au niveau de leurs interfaces, de manière à réactiver la résine composant les couches 188 pour que celle-ci assure l'adhésion des panneaux 178 entre eux. La pression exercée sur les panneaux 178 lors du soudage est de préférence comprise entre 5 et 35 kg/cm². La température de chauffage des panneaux 178 lors du soudage est avantageusement comprise entre 60 et 120°C.

Cette technique de liaison des panneaux 178 les uns aux autres présente comme avantage d'assurer une grande homogénéité de la voile, puisque le soudage assure une continuité de la matière au sein de la voile ; les risques de pelage ou de vieillissement accéléré au niveau des pinces est donc réduit.

Grâce à l'invention décrite ci-dessus, il est possible de fabriquer des bandes composites ayant une masse surfacique comprise entre seulement 10 et 60 g/m², ce qui permet d'obtenir des voiles très légères présentant néanmoins une excellente stabilité de forme.

Cette invention permet également la production de voiles présentant une grande résistance, puisque les bandes composites entrant dans la composition de ces voiles sont des bandes hybrides combinant ainsi les avantages des filaments de deux matériaux ou plus. On notera en particulier que le fait de recourir à la production de deux voiles de filaments et de résine, et à la superposition desdits deux voiles pour former les bandes hybrides, permet un mélange optimal des filaments des deux types, ce qui confère une grande homogénéité à la voile dans sa tenue structurelle. Cette grande résistance est également obtenue grâce à la très bonne répartition des filaments dans la voile, ce qui permet de multiplier les croisements entre filaments et réduit les risques de délamination.

On notera que, bien que l'invention ait été décrite dans le cas où des bandes composites hybrides sont fabriquées et utilisées dans la production de la membrane, l'invention n'est pas limitée à ce seul cas. En particulier, l'invention s'étend également au cas où les bandes composites fabriquées et utilisées dans la production de la membrane sont des bandes composites comportant un seul type de filaments.

A cet effet, il suffit que l'installation de fabrication 12 soit limitée aux seuls deuxième poste de fabrication 24 et poste d'enroulement 28, l'installation 12 ne comportant alors pas le premier poste de fabrication 20. La bande composite fabriquée par l'installation 12 est alors constituée par la bande composite obtenue après séchage du deuxième voile de filaments et de résine. Il est ainsi possible de produire des membranes encore plus légères, quoique présentant une moins bonne stabilité de forme.

## Revendications

1. Procédé de fabrication d'une bande composite (26), comportant les étapes suivantes :
- fourniture de premiers filaments (23), lesdits premiers filaments (23) étant regroupés en au moins un premier faisceau,
- étalement des premiers filaments (23) les uns à l'écart des autres et enduction des premiers filaments (23) avec une résine, de manière à former un premier voile de filaments et de résine, et
- séchage du premier voile de filaments et de résine, de manière à obtenir une première bande composite (22),
l'étape d'étalement et d'enduction comprenant le passage des premiers filaments (23) dans un premier bain de résine (48), contenant une première solution de résine, entre deux premiers rouleaux (60, 62), lesdits premiers rouleaux (60, 62) étant disposés sensiblement parallèlement l'un à l'autre et tournant autour de leurs axes respectifs (64, 66) dans des sens opposés l'un vers l'autre, de manière à entraîner les premiers filaments (23) dans le bain de résine (48) à une vitesse d'entraînement, lesdits premiers rouleaux (60, 62) définissant ensemble un fond (68) du premier bain de résine (48), les premiers filaments (23) entrant dans le premier bain de résine (48) par une surface (70) du premier bain de résine (48) et sortant du premier bain de résine (48) par le fond (68) du premier bain de résine (48),
**caractérisé en ce que** l'étape d'étalement et d'enduction comprend également, une étape de pré-étalement des premiers filaments (23) à leur entrée dans le premier bain de résine (48), ladite étape de pré-étalement comprenant une phase de mise sous tension des premiers filaments (23) suivant une direction parallèle à leur axe d'extension et une phase de relâchement de la tension appliquée sur les premiers filaments (23), les phases de mise sous tension et de relâchement alternant cycliquement.

2. Procédé de fabrication selon la revendication 1, dans lequel la première solution de résine comprend une résine thermoplastique diluée dans de l'eau, ladite résine thermoplastique ayant un module viscoélastique, à 20°C, compris entre 2.10^{e}5 Pa et 3.10^{e}8 Pa, de préférence entre 2.10^{e}6 et 2.10^{e}7 Pa..

3. Procédé de fabrication selon la revendication 1 ou 2, dans lequel l'étape de pré-étalement comprend le passage des premiers filaments (23) contre une surface de contact (56) d'un excentrique (50) tournant autour d'un axe de rotation (52) sensiblement parallèle aux premiers rouleaux (60, 62), la distance de la surface de contact (56) à l'axe de rotation (52) variant, au cours de la rotation de l'excentrique (50) autour de son axe (52), entre une distance minimale et une distance maximale, la phase de mise sous tension des premiers filaments (23) étant constituée par une phase au cours de laquelle la distance de la surface de contact (56) à l'axe de rotation (52) varie de sa distance minimale à sa distance maximale, et la phase de relâchement étant constituée par une phase au cours de laquelle la distance de la surface de contact (56) à l'axe de rotation (52) varie de sa distance maximale à sa distance minimale.

4. Procédé de fabrication selon l'une quelconque des revendications précédentes, comprenant une étape supplémentaire de prise en sandwich des premiers filaments (23) entre deux films antiadhésifs (74, 77) à l'intérieur du premier bain de résine (48) de manière à ce que, à leur sortie du premier bain du résine (48), les premiers filaments (23) soient pris en sandwich entre lesdits films antiadhésifs (74, 77).

5. Procédé de fabrication selon la revendication 4, comprenant une étape de retrait d'un premier des films antiadhésifs (77) après le séchage du premier voile de filaments.

6. Procédé de fabrication selon la revendication 4 ou 5, dans lequel au moins un des films antiadhésifs (74, 77), de préférence chacun des films antiadhésifs (74, 77), est perméable à la vapeur d'eau.

7. Procédé de fabrication selon l'une quelconque des revendications 4 à 6, dans lequel au moins un des films antiadhésifs (74, 77), de préférence chacun des films antiadhésifs (74, 77), est constitué par du papier siliconé.

8. Procédé de fabrication selon l'une quelconque des revendications précédentes, dans lequel l'étape de fourniture comprend la fourniture d'au moins une fibre (31) formée de premiers filaments regroupés en faisceau, et le procédé comprend une étape supplémentaire de traitement de la ou chaque fibre (31), préalablement à l'étape de pré-étalement, adaptée pour faciliter l'étalement ultérieur des premiers filaments composant la fibre (31).

9. Procédé de fabrication selon l'une quelconque des revendications précédentes, dans lequel les premiers filaments (23) sont orientés, lors de l'étape de pré-étalement, de sorte que leur axe d'extension s'étende sensiblement verticalement.

10. Procédé de fabrication selon l'une quelconque des revendications précédentes, dans lequel la tension exercée sur les premiers filaments (23) pendant l'étape de pré-étalement est appliquée par un organe tenseur (49), lequel est disposé de sorte qu'une portion amont des premiers filaments (23), disposée en amont dudit organe tenseur (49), soit orientée suivant une direction inclinée ou horizontale, et qu'une portion aval des premiers filaments (23), disposée en aval de l'organe tenseur (49), soit orientée sensiblement verticalement.

11. Procédé de production d'une voile de bateau, **caractérisé en ce qu'**il comprend les étapes successives suivantes :
- fabrication d'une pluralité de bandes composites (26) selon l'une quelconque des revendications précédentes, et
- assemblage d'une membrane (17), ladite étape d'assemblage comprenant les sous-étapes suivantes :
∘ dépose des bandes composites (26) sur un support (132), suivant un motif prédéterminé, et
∘ chauffage et compression simultanés des bandes composites (26), de manière à lier les bandes composites (26) les unes aux autres.

12. Procédé de production selon la revendication 11, dans lequel, lors de l'étape de chauffage et compression, les bandes composites (26) sont comprimées sur le support (132).

13. Procédé de production selon la revendication 11 ou 12, dans lequel le support (132) comprend une surface (140) de réception des bandes composites (26), ladite surface de réception (140) étant plane.

14. Procédé de production selon l'une quelconque des revendications 11 à 13, comprenant :
- préalablement à l'étape de chauffage et compression, une étape de plaquage d'un couvercle (148) contre le support (132), par-dessus les bandes composites (26) déposées, et
- ultérieurement à l'étape de chauffage et compression, une étape de démoulage de la membrane produite par injection d'air entre le couvercle (148) et les bandes composites (26).

15. Installation (12) de fabrication de bandes composites (26), comportant au moins un poste (20, 24) de fabrication d'une bande composite avec :
- un poste (30, 80) de fourniture de filaments (23),
- un poste (34, 84) d'étalement des filaments (23) les uns à l'écart des autres et d'enduction des filaments (23) avec une résine, de manière à former un voile de filaments et de résine, et
- un poste (36, 86) de séchage du voile de filaments et de résine,
le poste d'étalement et d'enduction (34, 84) comprenant un bain de résine (48, 98), contenant une solution de résine, entre deux rouleaux (60, 62, 110, 112), lesdits rouleaux (60, 62, 110, 112) étant disposés sensiblement parallèlement l'un à l'autre et définissant ensemble un fond (68, 118) du bain de résine (48, 98), et un système d'entraînement des rouleaux (60, 62, 110, 112) en rotation autour de leurs axes respectifs (64, 66, 114, 116) dans des sens opposés l'un vers l'autre, de manière à entraîner les premiers filaments (23) dans le bain de résine (48, 98) à une vitesse d'entraînement, le poste de fabrication (20, 24) étant configuré pour guider les filaments (23) de sorte qu'ils entrent dans le bain de résine (48, 98) par une surface (70, 120) du bain de résine (48, 98) et sortent du bain de résine (48, 98) par le fond (68, 118) du bain de résine (48, 98),
**caractérisée en ce que** le poste d'étalement et d'enduction (34, 84) comprend également, en amont du bain de résine (48, 98), un poste (46, 96) de pré-étalement des filaments (23), ledit poste de pré-étalement (46, 96) comprenant un organe tenseur (49, 99) adapté pour alternativement mettre une portion aval des filaments (23), disposée en aval de l'organe tenseur (49, 99), sous tension suivant une direction parallèle à un axe d'extension de ladite portion aval, et relâcher la tension appliquée sur ladite portion aval, l'organe tenseur (49, 99) étant adapté pour alterner cycliquement les phases de mise sous tension des filaments (23) et de relâchement de la tension appliquée sur les filaments (23).

16. Installation de fabrication (12) selon la revendication 15, dans laquelle la portion aval des filaments (23) est orientée suivant une direction sensiblement verticale.

17. Installation de fabrication (12) selon la revendication 16, dans laquelle l'organe tenseur (49, 99) est disposé de sorte qu'une portion amont des filaments (23), disposée en amont de l'organe tenseur (49, 99), soit orientée suivant une direction inclinée ou horizontale.

## Patentansprüche

1. Verfahren zur Fertigung einer Verbundbahn (26), das die folgenden Schritte aufweist:
- Liefern von ersten Filamenten (23), wobei die ersten Filamente (23) zu mindestens einem ersten Bündel gruppiert sind,
- Ausbreiten der ersten Filamente (23) jeweils mit Abstand zueinander und Beschichten der ersten Filamente (23) mit einem Harz, um einen ersten Schleier aus Filamenten und Harz zu bilden, und
- Trocknen des ersten Schleiers aus Filamenten und Harz, um eine erste Verbundbahn (22) zu erhalten,
wobei der Schritt des Ausbreitens und Beschichtens den Durchgang der ersten Filamente (23) in einem ersten Harzbad (48), das eine erste Harzlösung enthält, zwischen zwei ersten Rollen (60, 62) umfasst, wobei die ersten Rollen (60, 62) im Wesentlichen parallel zueinander angeordnet sind und sich um ihre jeweiligen Achsen (64, 66) in zueinander entgegengesetzten Richtungen drehen, um die ersten Filamente (23) in dem Harzbad (48) bei einer Antriebsgeschwindigkeit anzutreiben, wobei die ersten Rollen (60, 62) zusammen einen Boden (68) des ersten Harzbades (48) bilden, wobei die ersten Filamente (23), die in das erste Harzbad (48) durch eine Fläche (70) des ersten Harzbades (48) eintreten und aus dem ersten Harzbad (48) durch den Boden (68) des ersten Harzbades (48) austreten,
**dadurch gekennzeichnet, dass** der Schritt des Ausbreitens und Beschichtens gleichfalls einen Schritt des Vorausbreitens der ersten Filamente (23) bei ihrem Eintritt in das erste Harzbad (48) umfasst, wobei der Schritt des Vorausbreitens eine Phase des Setzens der ersten Filamente (23) unter Spannung gemäß einer ersten Richtung parallel zu ihrer Streckungsachse und eine Phase des Lösens der auf die ersten Filamente (23) aufgebrachten Spannung umfasst, wobei die Phasen des unter Spannung Setzens und Lösens zyklisch wechseln.

2. Fertigungsverfahren nach Anspruch 1, bei dem die erste Harzlösung ein in Wasser gelöstes thermoplastisches Harz umfasst, wobei das thermoplastische Harz ein Viskoelastizitätsmodul bei 20 °C zwischen 2,10^{e}5 Pa und 3,10^{e}8 Pa, vorzugsweise zwischen 2,10^{e}6 und 2,10^{e}7 Pa aufweist.

3. Fertigungsverfahren nach Anspruch 1 oder 2, bei dem der Schritt des Vorausbreitens den Übergang der ersten Filamente (23) über eine Kontaktfläche (56) eines Exzenters (50) umfasst, der um eine im Wesentlichen parallel zu den ersten Rollen (60, 62) liegenden Drehachse (52) dreht, wobei die Entfernung der Kontaktfläche (56) zur Drehachse (52) während der Drehung des Exzenters (50) um seine Achse (52) zwischen einer Minimalentfernung und einer Maximalentfernung variiert, wobei die Phase des unter Spannung Setzens der ersten Filamente (23) aus einer Phase gebildet wird, während der die Entfernung der Kontaktfläche (50) zur Drehachse (52) von seiner Minimalentfernung bis zu seiner Maximalentfernung variiert, und die Phase des Lösens durch eine Phase gebildet wird, während der die Entfernung der Kontaktfläche (56) zur Drehachse (52) von seiner Maximalentfernung bis zu seiner Minimalentfernung variiert.

4. Fertigungsverfahren nach einem beliebigen der vorhergehenden Ansprüche, das einen zusätzlichen Schritt umfasst, bei dem die ersten Filamente (23) zwischen zwei Antihaftfolien (74, 77) im Inneren des ersten Harzbades (48) genommen werden, derart dass bei ihrem Austritt aus dem ersten Harzbad (48), die ersten Filamente (23) zwischen den Antihaftfolien (74, 77) liegen.

5. Fertigungsverfahren nach Anspruch 1, das einen Schritt des Entfernens einer ersten der Antihaftfolien (77) nach dem Trocknen des ersten Schleiers von Filamenten umfasst.

6. Fertigungsverfahren nach Anspruch 4 oder 5, bei dem mindestens eine der Antihaftfolien (74, 77), vorzugsweise jede der Antihaftfolien (74, 77) für Wasserdampf durchlässig ist.

7. Fertigungsverfahren nach einem beliebigen der vorhergehenden Ansprüche 4 bis 6, bei dem mindestens eine der Antihaftfolien (74, 77), vorzugsweise jede der Antihaftfolien (74, 77) aus silikonisiertem Papier gebildet wird.

8. Fertigungsverfahren nach einem beliebigen der vorhergehenden Ansprüche, bei dem der Lieferschritt das Liefern mindestens einer Faser (31) umfasst, die aus zu einem Bündel gruppierten ersten Filamenten gebildet ist, und das Verfahren vor dem Schritt des Ausbreitens einen zusätzlichen Schritt des Behandelns der oder jeder Faser (31) umfasst, der angepasst ist, das spätere Ausbreiten der die Faser (31) zusammensetzenden ersten Filamente zu vereinfachen.

9. Fertigungsverfahren nach einem beliebigen der vorhergehenden Ansprüche, bei dem die ersten Filamente (23) bei dem Schritt des Vorausbreitens so orientiert sind, dass ihre Streckungsachse sich im Wesentlichen senkrecht erstreckt.

10. Fertigungsverfahren nach einem beliebigen der vorhergehenden Ansprüche, bei dem die auf die ersten Filamente (23) während des Schritts des Vorausbreitens ausgeübte Spannung durch ein Spannelement (49) aufgebracht wird, das derart angeordnet ist, dass ein stromaufwärts liegender Teil der ersten Filamente (23), der stromaufwärts zu dem Spannelement (49) liegt, gemäß einer geneigten oder horizontalen Richtung gerichtet ist und ein stromabwärts liegender Teil der ersten Filamente (23), der stromabwärts zu dem Spannelement (49) liegt, im Wesentlichen senkrecht gerichtet ist.

11. Verfahren zum Herstellen eines Segels eines Schiffes, **dadurch gekennzeichnet, dass** es die folgenden aufeinanderfolgenden Schritte umfasst:
- Herstellen einer Mehrzahl von Verbundbahnen (26) nach einem beliebigen der vorhergehenden Ansprüche, und
- Zusammenfügen einer Membran (17), wobei der Schritt des Zusammenfügens die folgenden Unterschritte umfasst:
∘ Auflegen von Verbundbahnen (26) auf einen Träger (132) gemäß einem vorbestimmten Muster, und
∘ gleichzeitiges Aufheizen und Komprimieren der Verbundbahnen (26), derart dass die Verbundbahnen (26) miteinander verbunden werden.

12. Herstellungsverfahren nach Anspruch 11, bei dem während des Schrittes des Aufheizens und Komprimierens die Verbundbahnen (26) auf dem Träger (132) komprimiert werden.

13. Herstellungsverfahren nach Anspruch 11 oder 12, bei dem der Träger (132) eine Aufnahmefläche (140) für die Verbundbahnen (26) umfasst, wobei die Aufnahmefläche (140) eben ist.

14. Herstellungsverfahren nach einem beliebigen der Ansprüche 13, umfassend:
- vor dem Schritt des Aufheizens und Komprimierens einen Schritt des Andrückens eines Deckels (148) gegen den Träger (132) über die abgelegten Verbundbahnen (26), und
- nach dem Schritt des Aufheizens und Komprimierens einen Schritt des Entformens der erzeugten Membran durch Eindüsen von Luft zwischen den Deckel (148) und die Verbundbahnen (26).

15. Anlage (12) zur Fertigung von Verbundbahnen (26), die mindestens eine Station (20, 24) zur Fertigung einer Verbundbahn aufweist, mit:
- einer Station (30, 80) zum Liefern von Filamenten (23),
- einer Station (34, 84) zum Ausbreiten der Filamente (23) jeweils mit Abstand zueinander und Beschichten der Filamente (23) mit einem Harz, um einen Schleier aus Filamenten und Harz zu bilden, und
- einer Station (36, 86) zum Trocknen des Schleiers aus Filamente und Harz,
wobei die Station (34, 84) zum Ausbreiten und Beschichten ein Harzbad (48, 98), das eine Harzlösung enthält, zwischen zwei Rollen (60, 62, 110, 112) umfasst, wobei die Rollen (60, 62, 110, 112) im Wesentlichen parallel zueinander angeordnet sind und zusammen einen Boden (68, 118) des Harzbades (48, 98) definieren, und ein System zum Antreiben der Rollen (60, 62, 110, 112) zur Drehung um ihre jeweiligen Achsen (64, 66, 114, 116) in zueinander entgegengesetzter Richtung umfasst, um die ersten Filamente (23) in dem Harzbad (48) bei einer Antriebsgeschwindigkeit anzutreiben, wobei die Fertigungsstation (20, 24) ausgebildet ist, die Filamente (23) so zu führen, dass sie in das Harzbad (48, 98) durch eine Fläche (70, 120) des Harzbades (48, 98) eintreten und aus dem Harzbad (48, 98) durch den Boden (68, 118) des Harzbades (48, 98) austreten,
**dadurch gekennzeichnet, dass** die Station (34, 84) zum Ausbreiten und Beschichten gleichfalls stromaufwärts zum Harzbad (48, 98) eine Station (46, 96) zum Vorausbreiten der ersten Filamente (23) umfasst, wobei die Station (46, 96) zum Vorausbreiten ein Spannelement (49, 99) umfasst, das angepasst ist, wechselweise einen stromabwärts liegenden Teil der Filamente (23), der stromabwärts zum Spannelement (49, 99) angeordnet ist, unter Spannung gemäß einer Richtung, parallel zu einer Streckungsachse des stromabwärts liegenden Teils zu setzen und die auf den stromabwärts liegenden Teil aufgebrachte Spannung zu lösen, wobei das Spannelement (49, 99) angepasst ist, die Phasen des unter Spannung Setzens der Filamente (23) und des Lösens der auf die Filamente (23) aufgebrachten Spannung zyklisch zu wechseln.

16. Fertigungsanlage (12) nach Anspruch 15, bei der der stromabwärts liegende Teil der Filamente (23) gemäß einer im Wesentlichen senkrechten Richtung gerichtet ist.

17. Fertigungsanlage (12) nach Anspruch 16, bei der das Spannelement (49, 99) so angeordnet ist, dass ein stromaufwärts liegender Teil der Filamente (23), der stromaufwärts zu dem Spannelement (49, 99) angeordnet ist, gemäß einer geneigten oder horizontalen Richtung gerichtet ist.

## Claims

1. Method for manufacturing a composite strip (26), comprising the following steps:
- providing first filaments (23), said first filaments (23) being grouped together in at least a first bundle,
- spreading the first filaments (23) apart from one another and coating the first filaments (23) with a resin so as to form a first sheet of filaments and resin, and
- drying the first sheet of filaments and resin so as to obtain a first composite strip (22),
the step of spreading and coating comprising passing the first filaments (23) through a first bath of resin (48), containing a first solution of resin, between two first rollers (60, 62), said first rollers (60, 62) being arranged substantially parallel to one another and rotating about their respective axes (64, 66) in opposite directions to one another, so as to pull the first filaments (23) into the bath of resin (48) at a pulling speed, said first rollers (60, 62) together defining a bottom (68) of the first bath of resin (48), the first filaments (23) entering the first bath of resin (48) through a surface (70) of the first bath of resin (48) and leaving the first bath of resin (48) through the bottom (68) of the first bath of resin (48),
**characterised in that** the step of spreading and coating also comprises a step of pre-spreading the first filaments (23) as they enter the first bath of resin (48), said step of pre-spreading comprising a phase of tensioning the first filaments (23) in a direction parallel to their axis of extension and a phase of releasing the tension applied to the first filaments (23), the phases of tensioning and release alternating cyclically.

2. Manufacturing method according to claim 1, wherein the first solution of resin comprises a thermoplastic resin diluted in water, said thermoplastic resin having a viscoelastic modulus, at 20°C, of between 2.10^{e}5 Pa and 3.10^{e}8 Pa, preferably between 2.10^{e}6 and 2.10^{e}7 Pa.

3. Manufacturing method according to claim 1 or 2, wherein the step of pre-spreading comprises passing the first filaments (23) against a contact surface (56) of an eccentric (50) which rotates about an axis of rotation (52) substantially parallel to the first rollers (60, 62), the distance of the contact surface (56) from the axis of rotation (52) varying, as the eccentric (50) rotates about its axis (52), between a minimum distance and a maximum distance, the phase of tensioning the first filaments (23) being constituted by a phase in which the distance of the contact surface (56) from the axis of rotation (52) varies from its minimum distance to its maximum distance, and the release phase being constituted by a phase in which the distance of the contact surface (56) from the axis of rotation (52) varies from its maximum distance to its minimum distance.

4. Manufacturing method according to any one of the preceding claims, comprising an additional step of sandwiching the first filaments (23) between two anti-adhesive films (74, 77) inside the first bath of resin (48) so that, on leaving the first bath of resin (48), the first filaments (23) are sandwiched between said anti-adhesive films (74, 77).

5. Manufacturing method according to claim 4, comprising a step of removing a first of the anti-adhesive films (77) after drying of the first sheet of filaments.

6. Manufacturing method according to claim 4 or 5, wherein at least one of the anti-adhesive films (74, 77), preferably each of the anti-adhesive films (74, 77), is permeable to water vapour.

7. Manufacturing method according to any one of claims 4 to 6, wherein at least one of the anti-adhesive films (74, 77), preferably each of the anti-adhesive films (74, 77), is constituted by silicone-coated paper.

8. Manufacturing method according to any one of the preceding claims, wherein the step of providing comprises providing at least one fibre (31) formed of first filaments grouped together in a bundle, and the method comprises an additional step of treating the or each fibre (31), prior to the step of pre-spreading, which is adapted to facilitate the subsequent spreading of the first filaments of which the fibre (31) is composed.

9. Manufacturing method according to any one of the preceding claims, wherein the first filaments (23) are oriented, in the step of pre-spreading, so that their axis of extension extends substantially vertically.

10. Manufacturing method according to any one of the preceding claims, wherein the tension exerted on the first filaments (23) during the step of pre-spreading is applied by a tensioning member (49) which is arranged so that an upstream portion of the first filaments (23), arranged upstream of said tensioning member (49), is oriented in an inclined or horizontal direction, and a downstream portion of the first filaments (23), arranged downstream of the tensioning member (49), is oriented substantially vertically.

11. Method for producing a boat sail, **characterised in that** it comprises the following successive steps:
- manufacturing a plurality of composite strips (26) according to any one of the preceding claims, and
- assembling a membrane (17), said step of assembling comprising the following sub-steps:
∘ depositing the composite strips (26) on a support (132) in a predetermined pattern, and
∘ simultaneously heating and compressing the composite strips (26) so as to bind the composite strips (26) to one another.

12. Production method according to claim 11, wherein, in the step of heating and compressing, the composite strips (26) are compressed on the support (132).

13. Production method according to claim 11 or 12, wherein the support (132) comprises a surface (140) for receiving the composite strips (26), said receiving surface (140) being flat.

14. Production method according to any one of claims 11 to 13, comprising:
- prior to the step of heating and compressing, a step of pressing a cover (148) against the support (132), above the deposited composite strips (26), and
- subsequently to the step of heating and compressing, a step of demoulding the membrane that has been produced by injecting air between the cover (148) and the composite strips (26).

15. Facility (12) for manufacturing composite strips (26), comprising at least one station (20, 24) for manufacturing a composite strip having:
- a station (30, 80) for providing filaments (23),
- a station (34, 84) for spreading the filaments (23) apart from one another and for coating the filaments (23) with a resin, so as to form a sheet of filaments and resin, and
- a station (36, 86) for drying the sheet of filaments and resin,
the station for spreading and coating (34, 84) comprising a bath of resin (48, 98), containing a solution of resin, between two rollers (60, 62, 110, 112), said rollers (60, 62, 110, 112) being arranged substantially parallel to one another and together defining a bottom (68, 118) of the bath of resin (48, 98), and a system for driving the rollers (60, 62, 110, 112) in rotation about their respective axes (64, 66, 114, 116) in opposite directions to one another, so as to pull the first filaments (23) into the bath of resin (48, 98) at a pulling speed, the manufacturing station (20, 24) being configured to guide the filaments (23) so that they enter the bath of resin (48, 98) through a surface (70, 120) of the bath of resin (48, 98) and leave the bath of resin (48, 98) through the bottom (68, 118) of the bath of resin (48, 98),
**characterised in that** the station for spreading and coating (34, 84) also comprises, upstream of the bath of resin (48, 98), a station (46, 96) for pre-spreading the filaments (23), said pre-spreading station (46, 96) comprising a tensioning member (49, 99) which is adapted to alternately tension a downstream portion of the filaments (23), arranged downstream of the tensioning member (49, 99), in a direction parallel to an axis of extension of said downstream portion, and release the tension applied to said downstream portion, the tensioning member (49, 99) being adapted to cyclically alternate the phases of tensioning the filaments (23) and of releasing the tension applied to the filaments (23).

16. Manufacturing facility (12) according to claim 15, wherein the downstream portion of the filaments (23) is oriented in a substantially vertical direction.

17. Manufacturing facility (12) according to claim 16, wherein the tensioning member (49, 99) is arranged so that an upstream portion of the filaments (23), arranged upstream of the tensioning member (49, 99), is oriented in an inclined or horizontal direction.
